(19) Europäisches Patentamt / European Patent Office / Office européen des brevets

(11) **EP 2 093 913 B1**

(12) **EUROPÄISCHE PATENTSCHRIFT**

(45) Veröffentlichungstag und Bekanntmachung des Hinweises auf die Patenterteilung:
**08.05.2024 Patentblatt 2024/19**

(21) Anmeldenummer: **09002515.6**

(22) Anmeldetag: **23.02.2009**

(51) Internationale Patentklassifikation (IPC):
$H04J\ 3/06^{(2006.01)}$ $H04W\ 56/00^{(2009.01)}$
$H04W\ 4/00^{(2018.01)}$

(52) Gemeinsame Patentklassifikation (CPC):
**G04G 7/00; G04G 5/00; H04J 3/0676; H04J 3/0697**

(54) **SCHALTUNGSANORDNUNG UND VERFAHREN ZUR SYNCHRONISATION VON UHREN IN EINEM NETZ**

CONTROL SYSTEM AND METHOD FOR SYNCHRONISING CLOCKS IN A NETWORK

SYSTÈME DE CONTRÔLE ET PROCÉDÉ DE SYNCHRONISATION D'HORLOGES DANS UN RÉSEAU

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **22.02.2008 DE 102008010536**

(43) Veröffentlichungstag der Anmeldung:
**26.08.2009 Patentblatt 2009/35**

(73) Patentinhaber: **Symeo GmbH**
**85579 Neubiberg (DE)**

(72) Erfinder:
• **Kirsch, Fabian**
  **38678 Clausthal-Zellerfeld (DE)**
• **Gulden, Peter, Dr.**
  **80636 München (DE)**
• **Vossiek, Martin, Dr.**
  **31139 Hildesheim (DE)**

(74) Vertreter: **Meissner Bolte Partnerschaft mbB**
**Patentanwälte Rechtsanwälte**
**Postfach 86 06 24**
**81633 München (DE)**

(56) Entgegenhaltungen:
EP-A2- 1 115 220    US-A1- 2002 131 398
US-A1- 2007 050 657    US-B1- 7 103 124

• (KANE) KIM K H ET AL: "A TTF-Based Programming Model and a Support Kernel Running on a Communicating Sensor Platform", AUTONOMOUS DECENTRALIZED SYSTEMS, 2007. ISADS '07. EIGHTH INTERNA TIONAL SYMPOSIUM ON, IEEE, PI, 1. März 2007 (2007-03-01), Seiten 368-376, XP031070341, ISBN: 978-0-7695-2804-5
• POONAM YADAV ET AL: "Cluster based hierarchical wireless sensor networks (CHWSN) and time synchronization in CHWSN", COMMUNICATIONS AND INFORMATION TECHNOLOGIES, 2007. ISCIT '07. INT ERNATIONAL SYMPOSIUM ON, IEEE, PI, 1. Oktober 2007 (2007-10-01), Seiten 1149-1154, XP031166635, DOI: 10.1109/ISCIT.2007.4392190 ISBN: 978-1-4244-0976-1

# EP 2 093 913 B1

## Beschreibung

Die Erfindung bezieht sich auf eine Schaltungsanordnung bzw. ein Verfahren zur Synchronisation von Uhren in einem Netz mit einer Vielzahl von zumindest zwei Knoten, wobei zumindest zwei dieser Knoten miteinander kommunizieren können und jeweils eine lokale Uhr aufweisen.

Eine hochgenaue Synchronisation von Netzwerken ist in vielen neuen Systemen notwendig, um verschiedenen Ereignissen eindeutige Zeitpunkte auf einer gemeinsamen Zeitskala zuordnen zu können. Dies muss auch dann möglich sein, wenn die Ereignisse an verschiedenen Stationen bzw. Knoten auftreten. Für Zeitmultiplexbetrieb ist eine gemeinsame Zeitbasis insbesondere dazu nötig, verschiedene Kanäle sauber voneinander trennen zu können.

Um diese hochgenaue Synchronisation erreichen zu können, sind bisher Taktquellen erforderlich, die eine sehr genau bekannte Frequenz bereitstellen. Die dadurch erforderlichen Anforderungen an Serienstreuung und Drift verursachen erhebliche Kosten. Die Taktquellen müssen so ausgestaltet sein, dass sie im Laufe der Alterung und auch in Abhängigkeit von veränderlichen Umgebungsbedingungen wie z.B. schwankender Temperatur nur geringfügig in ihrer Frequenz driften.

Dies führte bisher dazu, dass bei TDMA-Netzen (TDMA: Time Division Multiple Access / zeitlich aufgeteilter Mehrfachzugriff) relativ große Guard-Intervalle (deutsch: Schutzintervalle) verwendet werden, um eine saubere Kanaltrennung trotz der nicht optimalen Synchronität sicherzustellen. Dies führt auf der einen Seite zu entweder einer geringen Kanalnutzung oder sehr langen Zeitschlitzen und auf der anderen Seite zu unnötig langen Betriebszeiten für den Empfänger, da der Empfänger während des Guard-Intervalls schon in Betrieb sein muss.

Wird ein Netz zur Koordination von Aktoren und Sensoren genutzt, so bestehen auch hier sehr häufig Echtzeitanforderungen, um komplexe Systeme zeitsynchron zu steuern und zu regeln oder aber auch um Messwerte mit einem exakten Zeitstempel zu versehen. Die Anforderung an die Synchronisierung von Aktor- und/oder Sensornetzen besteht insbesondere in modernen verteilen Mess- und Regelungssystemen, also z.B. in der Automatisierungstechnik, Fahrzeugtechnik, Gebäudetechnik oder Robotik.

In Funkortungssystemen stellt die Synchronisierung der Netzwerkknoten ebenfalls eine zentrale Aufgabe dar. Nur wenn in allen an der Messung beteiligten Stationen exakt die gleichen Uhrzeiten vorliegen, sind einfache Signallaufzeitmessungen möglich. Bei GPS (Globales Positionierungssystem) werden beispielsweise Atomuhren in Satelliten oder bei anderen Ortungssystemen komplexe Synchronisierungsverfahren eingesetzt, um die Uhren-Synchronität zu gewährleisten.

Sowohl bei Mess- als auch bei Kommunikationssystemen werden sehr häufig kodierte bzw. code-gespreizte Sendesignale und korrelierende Empfänger verwendet, um im Empfänger ein verbessertes Nutz- zu Störsignalverhältnis zu gewährleisten. Häufig verwendete Signalformen, welche auch als spread spectrum signals oder Spreizsignale bezeichnet werden, sind z.B. pseudozufällig phasen- oder amplitudenmodulierte Impulssequenzen oder linear bzw. stufenweise frequenzmodulierte Signale. Es ist bekannt, dass es bei derartigen korrelierenden Systemen häufig ebenfalls sehr günstig ist, wenn Sender und Empfänger vorsynchronisiert sind, da dann der Korrelator sehr viel einfacher, d.h. mit kleinerem Rechenaufwand in Software oder aber auch mit einfacheren Hardwarekorrelatoren realisiert werden kann und/oder die für die Korrelation benötigte Zeitdauer reduziert werden kann.

Aktuelle Lösungen zu dem Problem der Synchronisation beruhen bisher in aller Regel darauf, dass eine Station bzw. ein Knoten lokal einen Takt bzw. eine Zeitskala erzeugt, die dann durch ein Synchronisationsprotokoll den anderen Stationen zur Verfügung gestellt wird. Diese lokale Zeitskala wird dadurch in Art eines Master-Slave-Systems zur globalen Zeitskala erhoben.

Ein Problem, das durch diese Vorgehensweise bestehen bleibt, ist die Stabilität und Verfügbarkeit der globalen Zeitskala bei Ausfall einzelner Stationen. Insbesondere bei Funknetzen zwischen mobilen Netzwerkknoten erwachsen daraus starke Einschränkungen für die Güte der Synchronisation.

Bekannte Verfahren zur Synchronisierung von Netzwerkknoten sind beispielsweise NTP (Network Time Protocol), PTP (Precision Time Protocol), TPSN (Timing-Sync Protocol for Sensor Networks) oder FTSP (Flooding Time Synchronization Protocol).

NTP (Network Time Protocol) basiert auf manuell vergebenen Strata, die eine Top-Down Baumstruktur bei der Verteilung der Zeit zur Folge haben, wie dies beschrieben ist in Mills, D.: Network Time Protocol (Version 3) Specification, Implementation and Analysis. RFC 1305 (Draft Standard), University of Delaware, Version März 1992. Eine Besonderheit ist hier, dass vor Schaltsekunden eine Zeit lang zwei Zeitskalen gepflegt werden - eine für den Zeitraum bis zur Schaltsekunde, eine für den Zeitraum ab der Schaltsekunde.

Auf diese Weise ist ein NTP-synchronisiertes Netz in der Lage auch nicht-kontinuierliche Zeitverläufe in synchroner Weise bereitzustellen.

PTP (Precision Time Protocol) nutzt das so genannte Best Master Clock Protocol, um die höchstwertige erreichbare Uhr zu bestimmen, wie dies beschrieben ist in IEEE 1588: Standard for a Precision Clock Synchronization Protocol for Networked Measurement and Control Systems. Anschließend wird auch hier die Zeit in ähnlicher Weise wie bei NTP verteilt.

TPSN (Timing-Sync Protocol for Sensor Networks) betreibt eine Baumstruktur unter den Knoten, die miteinander kommunizieren können, und verteilt dort die Zeitskala desjenigen beteiligten Knotens, der die niedrigste Seriennummer hat, wie bekannt ist aus Ganeriwal, Saurabh; Kumar, Ram; Srivastava, Mani B., Timing-sync protocol for sensor networks, SenSys '03: Proceedings of the lst international conference an Embedded networked sensor systems, New York, ACM Press, 2003.

FTSP (Flooding Time Synchronization Protocol) hat in jedem zusammenhängenden Baum einen Master, der dadurch bestimmt ist, dass er die niedrigste Seriennummer hat, wie bekannt ist aus Maroti M., Kusy B., Simon G., Ledeczi A.: The Flooding Time Synchronization Protocol, ISIS-04-501, 12. Februar 2004.

Ferner wird ein Verfahren in (KANE) KIM K H ET AL: "A TTF-Based Programming Model and a Support Kernel Running on a Communicating Sensor Platform", AUTONOMOUS DECENTRALIZED SYSTEMS, 2007. ISADS '07. EIGHTH INTERNATIONAL SYMPOSIUM ON, IEEE, PI, 1. März 2007 (2007-03-01), Seiten 368-376, XP031070341, ISBN: 978-0-7695-2804-5 beschrieben, bei dem Slave-Knoten ihre lokalen Uhrzeiten an eine absolute globale Uhrzeit eines Master-Knotens anpassen.

Den zuvor genannten Protokollen ist gemeinsam, dass der Ausfall oder die Unerreichbarkeit eines Masters erkannt werden muss, und dann möglichst schnell ein neuer Master bestimmt, und dessen Zeitskala adaptiert werden muss. Dieser Vorgang ist sehr zeitkritisch, da bei einer angestrebten Synchronität von z.B. 10 ps und einem Quarztaktunterschied von 40 ppm zwischen verschiedenen Knoten, die Synchronisation schon nach 0,25 s verloren geht, wenn ein Master unerreichbar wird, und ein Teil der Slaves schon dem neuen Master folgt, während andere Slaves die Zeitskala des alten Master weiter extrapolieren.

Um mit einer solchen Struktur hochgenaue Synchronisation zu erreichen, müssen die Intervalle zwischen den einzelnen Referenzmessungen sehr kurz gehalten werden. Dies führt zu einer hohen Kanalauslastung allein durch die Synchronisation und zu einem erheblichen Energie-Grundverbrauch bei mobilen Knoten.

FTSP entschärft dieses Problem zwar dadurch, dass ein Knoten, der von Slave auf Master umschaltet, zunächst die Zeitskala des vorhergehenden Masters extrapoliert und ihn dadurch imitiert. Durch diese Maßnahme driften die Stationen eines Netzwerkes in ihrer Zeit nur langsam auseinander, wenn der Master verloren geht. Allerdings wird immer die Zeit mehrerer Messintervalle benötigt, bevor das Verschwinden von einem Master bemerkt und der neue Master ermittelt wird.

Allgemein bekannt ist ein Einsatz von verteilten Kalmanfilter in Netzwerken aus Olfati-Saber: Distributed Kalman Filter with Embedded Consensus Filters, in: CDC-ECC '05: 12-15 Dec. 2005, p. 8179- 8184.

Beim Einsatz eines bekannten verteilten Kalmanfilter zur Zeitschätzung würden z.B. fremde Sensorinformationen den Konsensfilter durchlaufen und dabei eine Verzögerung erfahren. Stellt man die Systemgleichung des Verteilten Kalmanfilter dar, als

$$x' = Ax + Bu$$

$$P' = APA^{T} + Q \qquad '$$

so ist es notwendig, dass $\|A\text{-}E\|^2 < \varepsilon$ gilt, um diese systematischen, durch die Verzögerung hervorgerufenen Fehler gering zu halten. Dies kann durch Beschleunigung der Taktung so weit erreicht werden, bis das sogenannte Propagation-delay (deutsch: Ausbreitungsverzögerung) in Bezug auf die Systemdynamik kurz ist. Dabei ist x der alte geschätzte Systemzustand, dargestellt als Vektor im Zustandsraum, und P die Kovarianz als ein Streuungsparameter der alten Systemschätzung. A ist die Systemmatrix eines typischen Kalmanfilters. Der Vektor u gibt den Eingriff in das System wieder und die Eingriffwirkungsmatrix B beschreibt den Einfluss auf den Systemzustand. Außerdem sind x' und P' der neue Systemzustand und die Kovarianz der neuen Systemschätzung. Q ist die Kovarianz der erwarteten Störungen. $\varepsilon$ ist eine kleine Konstante, die von den Anforderungen an die Filterung abhängig ist.

Diese verteilten Kalmanfilter sind aber nicht zum Einsatz für Synchronisationszwecke geeignet, da Kalmanfilter die Sensorwerte anderer Stationen nur latenzbehaftet verwenden können.

Außerdem sind Aspekte zur Synchronisierung bekannt aus Roehr, Sven; Gulden, Peter; Vossiek, Martin: Method for High Precision Clock Synchronization in Wireless Systems with Application to Radio Navigation, p. 551-554, Radio and Wireless Symposium, Jan 2007 IEEE.

Hinweise zur grundsätzlichen Ausgestaltung von TOA- und TDOA-Systemen finden sich z.B. in M. Vossiek, L. Wiebking, P. Gulden, J. Weighardt, C. Hoffmann and P. Heide, "Wireless local positioning," IEEE Microwave Magazine, vol. 4, pp. 77-86, 2003 oder in DE1254206 oder in DE 1240146, DE 1214754, US 3864681 oder US 5216429 und in Literatur zu dem Global Positioning System GPS.

US2002/131398 A1 (TAYLOR JAMES L [FR]) 19. September 2002 offenbart ein Verfahren zur Synchronisierung mittels Übertragung von Zeitnachrichten.

Die Aufgabe der Erfindung besteht darin, eine Schaltungsanordnung bzw. ein Verfahren zur Synchronisation von Uhren in einem Netz mit einer Vielzahl von zumindest zwei Knoten so zu verbessern, dass diese eine Synchronisierung mit einem konstruktiv oder verfahrenstechnisch geringen Aufwand und ohne eine zwingend vorgegebene Referenz-Zeitquelle vorzugsweise hochgenau ermöglichen.

Diese Aufgabe wird durch das Verfahren mit den Merkmalen des Patentanspruchs 1 bzw. die Schaltungsanordnung mit den Merkmalen des Patentanspruchs 12 gelöst. Vorteilhafte Ausgestaltungen sind Gegenstand von abhängigen Ansprüchen.

Offenbart wird demgemäß ein Verfahren zur Synchronisation von Uhren in einem Netz, insbesondere Kommunikations- bzw. Datennetz, mit einer Vielzahl von zumindest zwei Knoten, wobei zumindest zwei dieser Knoten miteinander kommunizieren können und jeweils eine lokale Uhr aufweisen, wobei in einem empfangenden dieser Knoten von zumindest einem sendenden anderen solcher Knoten eine von diesem sendenden der Knoten ausgesendete globale Uhrzeit des sendenden der Knoten empfangen wird, und abhängig von sowohl der empfangen globalen Uhrzeit des sendenden Knotens als auch einer lokalen Uhrzeit der eigenen lokalen Uhr des empfangenden Knotens eine globale Uhrzeit dieses empfangenden Knotens bestimmt oder geschätzt wird.

Insbesondere handelt es sich um ein Verfahren in einem funkgestützten Netz mit hochgenauen Uhren zur Synchronisation von Takt- und Zeitmesseinrichtungen. Anstelle einer lokalen Uhrzeit eines jeden der Knoten kann dessen globale Uhrzeit für eine zeitgestützte Verarbeitung weiterer Prozesse verwendet werden. Ausgenutzt wird dabei, dass die globalen Uhrzeiten der verschiedenen Knoten genauer zueinander passen als deren lokale Uhrzeiten. Bei einem derart bevorzugten Knoten handelt es sich somit um eine Netzkomponente, welche zwei Uhren bzw. zwei Uhrzeiten aufweist. Dabei ist die lokale Uhr insbesondere direkt abhängig von einem lokalen Oszillator und gibt eine lokale Uhrzeit dieses Knotens wieder. Die globale Uhrzeit des Knotens wird hingegen unter auch Berücksichtigung der eigenen lokalen Uhrzeit abgestimmt auf die entsprechenden globalen Uhrzeiten der anderen derartigen Knoten.

Die globale Uhrzeit des empfangenden Knotens kann bestimmt oder geschätzt werden, worunter der Einsatz von Berechnungsmethoden mit einer möglichst genauen Kalkulation oder eines Schätzungsverfahrens zum Schätzen ungefährer Zeitwerte zu verstehen ist.

Bevorzugt wird, wenn die bestimmte oder geschätzte globale Uhrzeit des empfangenden Knotens von dem empfangenden Knoten an die weiteren solcher Knoten gesendet wird. Vorteilhaft ist dies, da die globalen Uhrzeiten einer möglichst großen Anzahl solcher Knoten so einfacher und insbesondere auch genauer zueinander synchronisierbar sind als es deren lokale Uhrzeiten wären. Bei beiderseitiger Kommunikation ergibt sich eine wechselseitige Aktualisierung und Verbesserung aller globaler Uhrzeiten. Je mehr Knoten derart miteinander kommunizieren, desto besser wird die wechselseitige Annäherung der einzelnen globalen Uhrzeiten der Knoten an eine fiktiv gemeinsame globale Uhrzeit.

Unter dem Senden bzw. Empfangen von Uhrzeiten bzw. entsprechenden Signalen oder Daten wird bevorzugt das Senden bzw. Empfangen über Funkschnittstellen verstanden. Jedoch kann darunter auch eine Übertragung über Leitungen kabelgestützter Netze, insbesondere Kommunikationsnetze, verstanden werden. Kommunikationsnetze sind dabei nicht nur im Sinne einer Kommunikation zwischen Menschen, sondern im weitesten Sinne eines Austauschs von Daten und Signalen zu verstehen. Das Kommunikationsnetz ist bevorzugt ein Echtzeit-Kommunikationsnetz. Unter Knoten eines Kommunikationsnetzes werden beispielsweise Komponenten verstanden wie über leitungsgestützte oder funkgestützte Schnittstellen kommunizierende Datengeräte oder Transponder. Aber auch insbesondere mobile Geräte eines Mobilfunksystems oder eines Ad-hoc-Netzes können in weiterem Sinne unter solche Knoten fallen, wenn sie ihre Uhrzeiten entsprechend der Verfahrensweise oder des konstruktiven Vorrichtungsaufbaus bestimmen.

Wenn bei der Bestimmung bzw. Schätzung der globalen Uhrzeit im Knoten auch die vorherige eigene globale Uhrzeit des Knotens mit verwendet wird ist dies vorteilhaft. Die vorherige bzw. bis zur Bestimmung der neuen globalen Uhrzeit geltende globale Uhrzeit des Knotens zu verwenden erhöht die Genauigkeit der Bestimmung bzw. Schätzung der neuen globalen Uhrzeit. Dabei kann die vorherige globale Uhrzeit gewichtet in die Bestimmung der neuen globalen Uhrzeit einbezogen werden.

In dem Knoten kann zu dessen momentaner globaler Uhrzeit ein Konfidenzwert für die Bestimmung bzw. Schätzung dieser globalen Uhrzeit bestimmt werden. Durch eine solche Verfahrensweise mit der Verwendung eines Vertraulichkeits- bzw. Konfidenzkriteriums ist eine Struktur mit einer übergeordneten Zentralstation zum Bereitstellen einer zentralen globalen Uhrzeit zur Weitergabe an alle einzelnen der Knoten entbehrlich. Eine Top-Down-Struktur mit einer zentralen Master-Uhr und vielen davon abhängigen dezentralen Slave-Uhren ist somit nicht erforderlich. Dabei kann bevorzugt im Knoten beim Bestimmen bzw. Schätzen der globalen Uhrzeit des Knotens der Konfidenzwert der bisherigen globalen Uhrzeit des Knotens mit verwendet werden.

Im Knoten kann vorteilhaft nach dem Empfangen der globalen Uhrzeit eines anderen Knotens zusammen mit einem derartigen, dieser empfangenen globalen Uhrzeit zugeordneten Konfidenzwert von dem empfangenden Knoten beim Bestimmen bzw. Schätzen der globalen Uhrzeit des empfangenden Knotens die empfangene globale Uhrzeit und deren zugeordneter Konfidenzwert verwendet werden. Dadurch können die anderen, empfangenden solcher Knoten insbesondere bei der Ermittlung von deren eigenen globalen Uhrzeiten bestimmen, in welchem Maß die empfangene globale Uhrzeit des anderen, sendenden Knotens berücksichtigt wird. Die globalen Uhrzeiten können optional entsprechend gewichtet bei der Bestimmung der neuen eigenen globalen Uhrzeit berücksichtigt werden.

Bevorzugt wird in dem Knoten ein Abweichungsmaß zwischen der eigenen globalen Uhrzeit und der eigenen lokalen Uhrzeit und/oder zwischen der eigenen globalen Uhrzeit und einer von außerhalb des Knotens empfangenen globalen Uhrzeit bestimmt oder geschätzt.

Dabei kann bei der Bestimmung bzw. Schätzung der globalen Uhrzeit von dem Knoten das Abweichungsmaß des eigenen Knotens und/oder ein solches Abweichungsmaß einer solchen empfangenen globalen Uhrzeit eines anderen solchen Knotens verwendet werden. Vorteilhaft wird durch Berücksichtigung der Abweichungsmaße eine Stabilität vor allem gegen ein gemeinsames Abwandern der globalen Uhrzeiten aller der Knoten gegenüber der Gesamtheit deren lokaler Uhren verhindert.

Insbesondere kann in zumindest zwei der Knoten jeweils eine Transformation vorgegebener Kennwerte der eigenen lokalen Uhrzeit zu Kennwerten einer globalen Uhr derart bestimmt oder geschätzt wird, dass in den Knoten jeweils zumindest ein solches Abweichungsmaß als Entwicklung eines Verhältnisses zwischen der jeweiligen eigenen lokalen Uhr und der eigenen globalen Uhr bestimmt werden und das Abweichungsmaß eines der Knoten kann in zumindest einem anderen solcher Knoten als Eingangswert für die lokale Zustandsschätzung in zumindest diesem einen anderen Knoten genutzt werden. Das Abweichungsmaß bildet somit ein Ergebnis der Zustandsschätzung, welches als Sendesignal an die anderen Knoten übertragen wird. Ein einfaches aber bereits effizientes Abweichungsmaß bildet bereits alleine die Information, ob die globale Uhr des aussendenden Knotens schneller oder langsamer läuft, als seine lokale Uhr laufen würde, wenn keine Eingriffe in sie vorgenommen worden wären.

Das Ergebnis kann optional auch die globale Uhrzeit des sendenden Knotens und als Abweichungsmaß einen Offset, insbesondere einen für den Sendezeitpunkt prognoszierten Offset dieser globalen Uhrzeit von der eigenen lokalen Uhrzeit und/oder die Vertraulichkeit dieser globalen Uhrzeit umfassen.

Dabei kann bevorzugt eine Korrektur zu einer langsameren Soll-Geschwindigkeit der globalen Uhrzeit durchgeführt werden, wenn ein vorbestimmbarer Anteil der verfügbaren Abweichungsmaße einen Hochgeschwindigkeits-Schwellwert überschreitet und/oder eine Korrektur zu einer schnelleren Soll-Geschwindigkeit der globalen Uhrzeit durchgeführt werden, wenn ein vorbestimmbarer Anteil der verfügbaren Abweichungsmaße einen Niedriggeschwindigkeits-Schwellwert unterschreitet.

Im Knoten wird bevorzugt die lokale Uhrzeit dieses Knotens um einen Zeitdifferenzwert zu der globalen Uhrzeit dieses Knotens angeglichen und dabei werden auf die bisherige lokale Uhrzeit bezogene Rechengrößen oder Parameter für die Schätzung oder Bestimmung der globalen Uhrzeit dieses Knotens angepasst, eine nachfolgende Schätzung oder Bestimmung der globalen Uhrzeit dieses Knotens durch die angeglichene die lokale Uhrzeit nicht zu beeinflussen. Wenn der Zeitdifferenzwert von der lokalen Uhrzeit abgezogen wird, wird entsprechend von der Rechengröße oder dem Parameter des Algorithmus oder Ablaufs zur Bestimmung der globalen Uhrzeit der Zeitdifferenzwert oder eine diesem entsprechende Größe ebenfalls abgezogen oder hinzugefügt. Andernfalls würde die nächste globale Uhrzeit dieses Knotens deutlich von der bisherigen abweichen und müsste erst wieder eingeregelt werden. Dabei würde die wieder einzuregelnde globale Uhrzeit bei Aussendung zu anderen Knoten in diesen ggfs. ebenfalls zu kurzzeitigen verstärkten Korrekturregelungen führen, bis alle globalen Uhrzeiten wieder möglichst nahe an eine ideale fiktive globale Uhrzeit geregelt sind.

Im Knoten wird bevorzugt beim Bestimmen bzw. Schätzen der globalen Uhrzeit des Knotens zusätzlich eine externe Uhrzeit einer Referenz-Zeitquelle als eine zusätzliche externe globale Uhrzeit verwendet, wobei die Referenz-Zeitquelle einem vom Netz der Knoten unabhängigen Zeitsystem zugeordnet ist. Die externe Uhrzeit der Referenz-Zeitquelle stellt somit eine von den lokalen und globalen Uhrzeiten der Knoten unabhängige externe Uhrzeit bereit. Die Referenz-Zeitquelle kann beispielsweise das DCF-Zeitsystem oder GPS-System sein, welches DCF- bzw. GPS-Signale aussendet, welche wiederum eine Zeitinformation als die externe Uhrzeit bereitstellen. Dadurch kann das Zeitsystem der Knoten stets auf ein davon unabhängiges Referenz-Zeitsystem abgestimmt werden, wenn ein Knoten, der auch eine solche externe Uhrzeit empfangen kann, in den Sendebereich einer solchen Referenz-Zeitquelle gelangt. Bevorzugt wird somit, wenn einzelne Einheiten bzw. Knoten über hochgenaue Zeitnormale, z.B. GPS-Zeit, verfügen und diese bei der Bestimmung der globalen Uhrzeit stärker gewichtet eingehen.

Bevorzugt wird ein Verfahren, bei dem der externen Uhrzeit ein Konfidenzwert abhängig davon zugeordnet wird, von welcher Art Zeitquelle die Referenz-Zeitquelle (XC) stammt. Dadurch kann einer gemäß einer hoch genauen Norm erstellten und ausgesendeten bzw. durch den Knoten empfangenen externen Uhrzeit eine hochwertige Konfidenz zugeordnet werden, während einer weniger vertraulichen externen Uhrzeit eine geringere Konfidenz zugeordnet wird. Dies ermöglicht eine selbsttätige optimale Gewichtung bei der Neuschätzung der globalen Uhrzeit im empfangenden Knoten.

Die bestimmte oder geschätzte globale Uhrzeit des Knotens wird zu einem zukünftigen Zeitpunkt an andere solche Knoten gesendet, wobei bevorzugt vor dem Aussenden für den zukünftigen Zeitpunkt der dann geltende globale Zeitpunkt oder der dann geltende globale Zeitpunkt zusammen mit einem Abweichungsmaß und/oder mit einem Konfidenzwert bestimmt wird. Dies ermöglicht Rechenzeiten oder sonstige Einflüsse zu kompensieren, welche während eines Sendevorgangs bzw. während der Vorbereitung eines Sendevorgangs dazu führen könnten, dass die Zeitinformation der gesendeten globalen Uhrzeit nicht derjenigen entspricht, zu der die tatsächliche Aussendung erfolgt.

Offenbart wird auch eine Schaltungsanordnung zur Synchronisation von Uhren in einem Netz, insbesondere Kommunikations- bzw. Datennetz, mit einer Vielzahl von zumindest zwei Knoten, wobei zumindest zwei dieser Knoten miteinander kommunizieren können und jeweils eine lokale Uhr aufweisen und wobei zumindest ein empfangender dieser Knoten ein Empfangsmodul aufweist zum Empfangen einer ausgesendeten globalen Uhrzeit eines sendenden solcher Knoten und eine Steuereinrichtung aufweist, welche ausgestaltet und/oder steuerbar ist zum Bestimmen oder Schätzen einer globalen Uhrzeit dieses empfangenden Knotens abhängig von sowohl der empfangen globalen Uhrzeit des sendenden Knotens als auch einer lokalen Uhrzeit der eigenen lokalen Uhr des empfangenden Knotens.

Eine solche Steuereinrichtung kann aus Hardware und/oder einem mittels Software gesteuerten Prozessor ausgestaltet sein. In letzterem Fall ist ihr ein Speicher zugeordnet, in welchem zumindest ein Algorithmus bzw. Softwareprogramm zum Steuern des Prozessors gespeichert ist, so dass die entsprechenden Funktionen und Verfahrensschritte ausgeführt werden können.

Die Schaltungsanordnung ist bevorzugt ausgebildet mit einem Sendemodul zum Senden der bestimmten oder geschätzten globalen Uhrzeit des empfangenden Knotens von dem empfangenden Knoten an die weiteren solcher Knoten.

Die Schaltungsanordnung weist bevorzugt einen Zustandsschätzer auf, der ausgestaltet und/oder steuerbar ist zum Bestimmen eines Konfidenzwerts in dem Knoten zu dessen momentaner globaler Uhrzeit.

In zumindest zwei der Knoten ist jeweils ein lokaler Zustandsschätzer implementiert, der jeweils ausgestaltet und/oder steuerbar ist zum Bestimmen jeweils eines Abweichungsmaßes als Entwicklung eines Verhältnisses zwischen der jeweiligen eigenen lokalen Uhr und der eigenen globalen Uhr, wobei die jeweilige Steuereinrichtung ausgestaltet und/oder steuerbar ist zum Verwenden des Abweichungsmaßes eines der Knoten in zumindest einem anderen solcher Knoten als Eingangswert für die lokale Zustandsschätzung in zumindest diesem einen anderen Knoten.

Bevorzugt wird die Schaltungsanordnung mit einem Abstimmungsmodul, das ausgestaltet oder ansteuerbar ist zum Bestimmen oder Schätzen eines Abweichungsmaßes zwischen der eigenen globalen Uhrzeit und der eigenen lokalen Uhrzeit. Dadurch wird ein Votum bzw. eine Abstimmung ermöglicht. Zusätzlich oder alternativ ist das Abstimmungsmodul ausgestaltet oder ansteuerbar, Abweichungsmaße zu bestimmen zwischen der eigenen globalen Uhrzeit und einer von außerhalb des Knotens empfangenen globalen Uhrzeit. Insbesondere sind diese letztgenannten Abweichungsmaße vorteilhaft als Eingangswerte für eine Filterung, insbesondere Kalmanfilterung einsetzbar.

Die Steuereinrichtung einer derartigen Schaltungsanordnung ist bevorzugt ausgestaltet und/oder steuerbar zum Durchführen eines der bevorzugten Verfahren.

Insbesondere wird das jeweilige Abweichungsmaß in einem Knoten dazu verwendet, die jeweilige lokale Uhr zu beeinflussen und aus mehreren Abweichungsmaßen verschiedener Knoten eine Größe abzuleiten, mit der die globale Uhr beeinflusst wird.

Die Beeinflussung der lokalen Uhr dient bevorzugt dazu, ihre Zeitabweichung zur globalen Uhr zu minimieren, und die Beeinflussung der globalen Uhr dient dazu, die mittlere Geschwindigkeitsabweichung der globalen Uhr zu den Uhren mehrerer Knoten zu minimieren.

Die Knoten weisen entsprechend Mittel bzw. Komponenten auf, um Messungen durchzuführen. Insbesondere werden den Messungen bzw. empfangenen Daten Zeitstempel in Bezug auf die Zeitbasis der lokalen oder der globalen Uhr des Knotens zugeordnet.

Das Kommunikationsnetz bzw. dessen Knoten können optional eine Ortungsfunktionalität umfassen. Bevorzugt wird eine Kombination mit einem System, welches auf einer Positionsbestimmung mittels lokalem Radars ermöglicht, wie dies für sich genommen z.B. bekannt ist aus WO 2003047137.

Bereitgestellt wird somit insbesondere ein neuartiges Synchronisationsverfahren mit verteilten Zustandsschätzern, die untereinander kooperieren, mit dem eine hochgenaue Synchronisation von örtlich verteilten Systemeinheiten erreicht werden kann. Ferner wird ein nachfolgend auch als kooperativer Kalmanfilter bezeichneter Zustandsschätzer vorgestellt. Dabei stellen sich die Kalmanfilter gegenseitig ihre jeweils aktuelle Zustandsschätzung zur Verfügung. Dieser Zustandsschätzer lässt sich über die vorliegend beschriebenen Aspekte hinaus auch überall dort vorteilhaft nutzen, wo die Systemdynamik eines beobachteten Systems zu groß ist, um die bekannten verteilten Kalmanfilter effektiv einzusetzen. Die bekannten verteilten Kalmanfilter wären ansonsten ohne eine solche Verfahrensweise durch Probleme durch Kommunikationsverzögerungen nicht einsetzbar.

Ein Ausführungsbeispiel wird nachfolgend anhand der Zeichnung näher erläutert. Es zeigen:

Fig. 1    Knoten eines Kommunikationsnetzes, welche untereinander Zeitinformationen austauschen und damit ihre eigenen Uhren relativ zu den Uhren der anderen Knoten synchronisieren;

Fig. 2    schematisch Komponenten und Verfahrensschritte zum Veranschaulichen des Verfahrensablaufs in einem solchen Knoten;

Fig. 3    abstrahiert drei Knoten an einem Kommunikationsnetz zur Veranschaulichung eines grundlegenden Verfahrensgedankens;

Fig. 4    ein Grundprinzip der kooperativen Kalmanfilter als Zustandsschätzern,

Fig. 5    Zeitdiagramme eines Zustandsschätzers in einem ersten Knoten;

Fig. 6    entsprechende Zeitdiagramme eines Zustandsschätzers in einem zweiten Knoten;

Fig. 7    ein gemeinsames Ereignis der beiden Knoten aus Sicht des Zustandsschätzers in dem ersten Knoten; und

Fig. 8    entsprechende Zeitdiagramme einer dadurch genaueren Schätzung im zweiten Knoten nach Berücksichtigung der Daten des ersten Knotens.

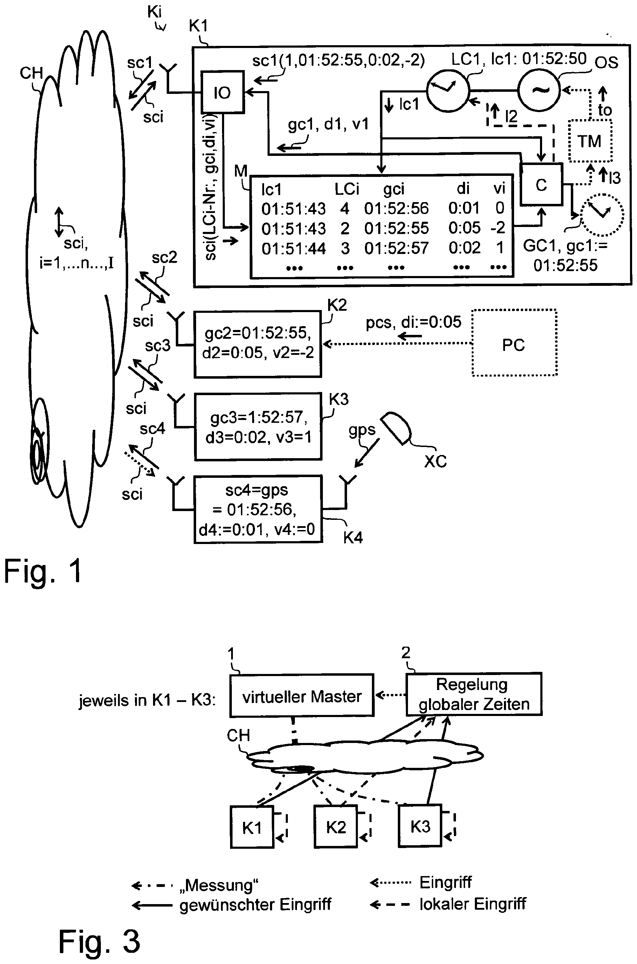

Wie aus Fig. 1 ersichtlich, kommunizieren mehrere Knoten K1, K2, K3, K4 bzw. Ki über einen oder mehrere Kanäle CH eines Netzes miteinander, wobei i als Platzhalter für die entsprechende Knotennummer i=1,2,..., n, ..., I steht. Übertragen werden über den Kanal CH Sendesignale sc1, sc2, sc3, sc4 bzw. sei. Erkennbar ist somit, dass jeder der Knoten K1, ..., K4, selber vorzugsweise ein eigenes Sendesignal sc1, ..., sc4 aussendet und jeder der Knoten K1, ..., K4, von vorzugsweise allen der anderen Knoten Ki entsprechende Sendesignale sei empfängt. Das Netz kann als Kommunikations- und/oder Datennetz ausgestaltet sein.

Daneben können die Knoten K1, ..., K4, zusätzlich auch weitere Nutz- oder Informationsdaten untereinander austauschen. In der Figur und Beschreibung werden vorliegend jedoch nur Daten, Sendesignale und sonstige Informationen beschrieben, welche zur Synchronisierung von Uhren der einzelnen Knoten Ki dienen. Auch können die zur Synchronisation erforderlichen Sendedaten in z.B. Datenrahmen anderer Übertragungssysteme als Nutzdaten oder Kopfabschnittsdaten übertragen werden.

Schematisch sind beispielhaft für den ersten der Knoten K1 verschiedene Komponenten und Signale skizziert, welche zum Durchführen eines bevorzugten Verfahrens zur Synchronisation von Uhren in Knoten Ki eines Kommunikationsnetzes erforderlich sind. Außerdem sind neben den Signalen auch einzelne Komponenten bevorzugter Schaltungsanordnungen zur Durchführung eines solchen Verfahrens skizziert.

Über eine Schnittstelle, insbesondere eine Antenne, werden von einem Sende-/Empfangsmodul IO entsprechende Sendesignale sci anderer Knoten K2 - K4 empfangen und Sendesignale sc1 dieses ersten Knotens K1 ausgesendet. Die empfangenen Sendesignale sei umfassen vorzugsweise als eine Zeitinformation der jeweils die Sendedaten bzw. das Sendesignal sei aussendenden Knoten Ki eine globale Uhrzeit gci.

Bei der globalen Uhrzeit gci handelt es sich um eine Zeitinformation, welche in dem jeweiligen Knoten Ki bestimmt oder geschätzt wurde. Dabei handelt es sich bei der jeweiligen globalen Uhrzeit gci genauer betrachtet um eine fiktive globale Uhrzeit gci, von welcher der jeweilige Knoten Ki ausgeht, dass es sich um die physikalisch reale tatsächliche momentane Zeit handelt, welche jedoch gegebenenfalls von sowohl der globalen Uhrzeit gci als auch von einer lokalen Uhrzeit lei dieses jeweiligen Knotens Ki abweichen kann.

Zusätzlich zu der globalen Uhrzeit gci ist in dem Sendesignal sei vorzugsweise ein Konfidenzwert di enthalten, welcher angibt, mit welcher Vertraulichkeit der die globale gci erstellende und aussendende Knoten Ki selber von der Richtigkeit der globalen Uhrzeit gci als einer physikalisch realen globalen Uhrzeit ausgeht.

Als noch weitere Information sind in dem Sendesignal sei vorzugsweise auch Daten enthalten, welche ein Abweichungsmaß vi angeben. Mit dem Abweichungsmaß vi signalisiert der aussendende Knoten Ki den übrigen empfangenden Knoten Ki, Kn, ob er davon ausgeht, dass seine eigene globale Uhrzeit gci im Verhältnis zu seiner eigenen lokalen Uhrzeit lci eher zu schnell oder eher zu langsam geht, oder ob eine Korrektur zu einer schnelleren oder zu einer langsameren Geschwindigkeit der lokalen globalen Uhrzeit bei diesem aussendenden Knoten Ki erforderlich war. Im einfachsten Fall besteht das Abweichungsmaß somit aus zwei Werten für die Zustände zu schnell oder zu langsam.

Optional kann das Sendesignal sei auch eine Information über die Nummer oder eine sonstige vorzugsweise eindeutige Identifizierungsinformation des aussendenden Knotens Ki oder von dessen globaler oder lokaler Uhr LCi-Nr. aufweisen, so dass in den empfangenden Knoten stets ein Überblick erhalten bleibt, ob eine empfangene Information in einem empfangenen Sendesignal eine ältere Information überschreiben muss oder von einem anderen Knoten stammt, zu dem noch keine Daten vorliegen.

Die Daten des empfangenen Sendesignals sei werden im ersten Knoten K1 in einem Speicher M zwischengespeichert. Dabei werden den zwischengespeicherten Daten, das heißt insbesondere den globalen Uhrzeiten gci, den Konfidenzwerten di und optional den Abweichungsmaßen vi die jeweiligen lokalen Empfangs-Uhrzeiten lc1 in dem Knoten K1 bzw. in dessen Sende-/Empfangsmodul IO zugeordnet. Mit anderen Worten ist insbesondere jeder empfangenen globalen Uhrzeit gci die lokale Empfangs-Uhrzeit lc1 zugeordnet, welche dem jeweiligen momentanen Empfangszeitpunkt gemäß einer lokalen Uhr LC1 entspricht. Beispielhaft abgebildet ist für eine erste lokale Empfangs-Uhrzeit 01:51:43, dass vom vierten Knoten K4 eine globale Uhrzeit gc4 mit dem Wert 01:52:56 empfangen wurde. Zum selben Empfangszeitpunkt wurde außerdem von dem zweiten Knoten K2 eine globale Uhrzeit gc2 mit dem Wert 01:52:55 empfangen. Zu einem nachfolgenden Empfangszeitpunkt mit der lokalen Empfangs-Uhrzeit lc1 mit dem Wert 01:51:44 wird von dem dritten Knoten K3 eine globale Uhrzeit gc3 mit dem Wert 01:52:57 empfangen.

Zusätzlich kann eine Schätzung der Ausbreitungsdauer vom Sender zum Empfänger dem empfangenen Sendesignal zugeordnet werden und/oder in einer solchen Weise abgespeichert werden, dass vom Empfangszeitpunkt auf den Sendezeitpunkt geschlossen werden kann. Insbesondere bei Knoten mit Möglichkeiten der Positionsschätzung können solche Maßnahmen zu einer weiteren Verbesserung der Synchronisationsgenauigkeit genutzt werden.

Außerdem sind den jeweiligen globalen Uhrzeiten gc2 - gc4 jeweils ein Konfidenzwert d2 - d4 und ein Abweichungsmaß v2 - v4 zugeordnet. Beispielsweise signalisiert der vierte Knoten K4 mit seinem Konfidenzwert d4 mit dem Wert 0:01, dass er der übermittelten globalen Uhrzeit gc4 in hohem Maße vertraut. Dies ist zum Beispiel dadurch bedingt, dass der vierte Knoten K4 zusätzlich über ein Modul verfügt, mit welchem er eine Zeitinformation einer Referenz-Zeitquelle XC empfangen kann, vorliegend eine Zeitinformation aus einem empfangenen Zeitsignal des GPS-Systems. Außerdem übermittelt der vierte Knoten K4 die Information, dass sein Abweichungsmaß v4 entsprechend dem Wert 0 gesetzt ist.

Der zweite Knoten K2 übermittelt als zusätzliche Informationen einen Konfidenzwert d2 mit dem Wert 0:05, welcher eine geringere Vertraulichkeit signalisiert. Außerdem wird vom zweiten Knoten K2 ein Abweichungsmaß v2 mit dem Wert -2 übermittelt, um ein zu langsames zeitliches Verhalten zu signalisieren. Im Falle des zweiten Knotens K2 handelt es sich um einen Knoten, welcher eine Zeitinformation pcs von einem lokalen Computer PC empfängt, wobei dieser Zeitinformation pcs ein entsprechender Konfidenzwert zugeordnet wird, welcher eine geringere Vertraulichkeit aufweist, als dies im Falle eines externen Zeitwertes von einer Referenz-Zeitquelle XC gelten würde.

Der dritte Knoten K3 ist ein eigenständiger Knoten ohne Zugriff auf externe Zeitquellen und führt wie der erste Knoten K1 lediglich eine Synchronisation seiner Uhren aufgrund der empfangenen Sendesignale sei durch. Entsprechend sind der übersendeten globalen Uhrzeit gc3 zusätzlich der Konfidenzwert d3 mit dem beispielhaften Wert 0:02 und das Abweichungsmaß v3 mit dem beispielhaften Wert 1 zugeordnet. Dadurch wird eine ebenfalls geringere Vertraulichkeit und ein Zuschnellgehen von dessen Uhren signalisiert.

Aus diesen Informationen bildet eine Steuereinrichtung C des ersten Knotens die vermutete bzw. geschätzte globale Uhrzeit gc1 des ersten Knotens. Von dieser globalen Uhrzeit gc1 geht der erste Knoten K1 aufgrund der gespeicherten Daten und zusätzlich seiner eigenen lokalen Uhrzeit lc1 aus, dass es sich um diejenige vermutliche globale Uhrzeit handelt, welche einer realen globalen Uhrzeit am ehesten entspricht.

Um den kommunizierenden weiteren Knoten K2 - K4 ebenfalls eine Synchronisierung von deren Uhren zu ermöglichen, stellt die Steuereinrichtung C entsprechende Informationen zum Bilden des eigenen Sendesignals sc1 bereit. Dabei handelt es sich neben der eigenen momentanen globalen Uhrzeit gc1 insbesondere um den Konfidenzwert d1 und das Abweichungsmaß v1, welche von der Steuereinrichtung C für die eigene globale Uhrzeit gc1 dieses Knotens K1 bestimmt oder berechnet wurden. Beispielsweise hat der erste Knoten K1 dabei eine neue aktuelle globale Uhrzeit gc1 mit dem Wert 01:52:55 als wahrscheinlich gerechtfertigste globale reale Uhrzeit bestimmt.

Mit Blick auf die Abweichung der früheren von der nunmehr geltenden globalen Uhrzeit gc1 im ersten Knoten K1 wird dessen für diese neue globale Uhrzeit gc1 geltender Konfidenzwert d1 entsprechend beispielsweise auf 0:02 gesetzt, um aufgrund der Berechnungsergebnisse eine relativ hohe Zuverlässigkeit zu signalisieren. Mit dem Abweichungsmaß v1 = -2 signalisiert der erste Knoten K1, dass seine eigene lokale Uhrzeit gc1 deutlich zu langsam im Vergleich zu der nunmehr geltenden neu geschätzten globalen Uhrzeit gc1 läuft, so dass auch dies bei Schätzungen in den übrigen Knoten berücksichtigt werden kann.

Die entsprechend zu sendenden Daten werden dann zu einem späteren Zeitpunkt von dem Sende-/Empfangsmodul IO an die weiteren Knoten K2 - K4 ausgesendet. Vor dem Aussenden wird jedoch durch die Steuereinrichtung C dafür gesorgt, dass die ausgesendeten Informationen nicht dem momentanen Zeitpunkt der Informationsbereitstellung, sondern dem zukünftigen Sendezeitpunkt richtig zugeordnet sind.

Optional kann die Steuereinrichtung C auch veranlassen, dass die lokale Uhr LC1 oder ein Oszillator OS, welcher ein Taktsignal für die lokale Uhr LC1 und weitere Komponenten des ersten Knotens K1 ausgibt, zu Korrektur der lokalen Uhr LC1 oder der weiteren Komponenten bereitgestellt wird. Entsprechend wird beispielsweise von der Steuereinrichtung C ein lokales Korrektursignal l2 an die lokale Uhr LC1 ausgegeben, um die lokale Uhrzeit lc1 an die nunmehr geltende globale Uhrzeit gc1 des ersten Knotens K1 anzupassen. Ein weiteres lokales Korrektursignal l3 wird entsprechend optional einem Trimm-Modul TM angelegt, welches mittels eines Trimm-Signals to den Oszillator OS schneller oder langsamer ansteuert.

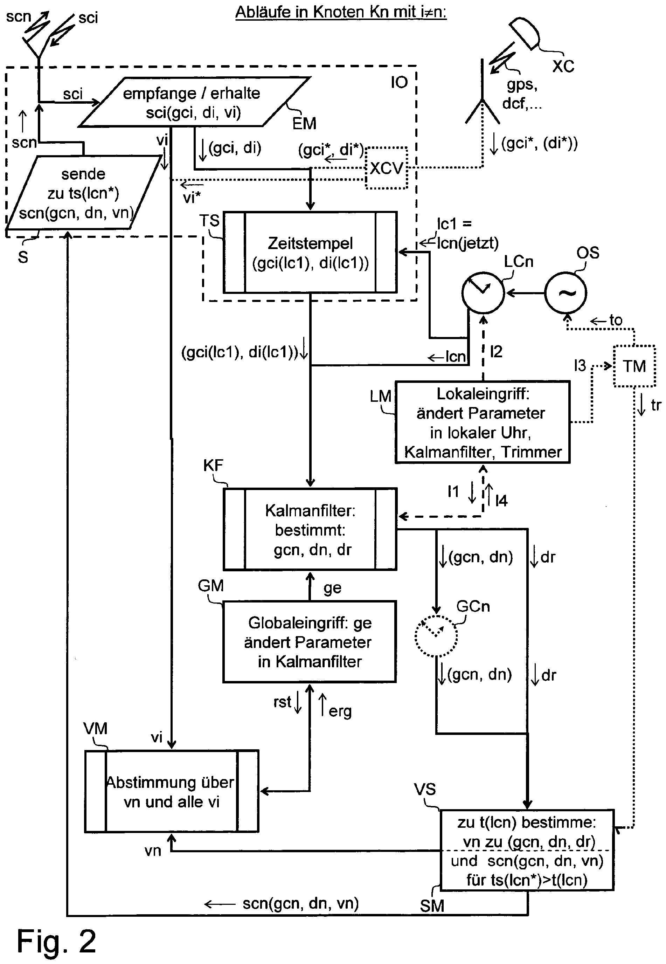

Fig. 2 zeigt einen beispielhaften Knoten Kn mit gegenüber Fig. 1 mehr Details hinsichtlich Komponenten, Verarbeitungsschritten und Daten bzw. Signalen. Soweit gleiche Bezugszeichen wie in Fig. 1 oder weiteren Figuren verwendet werden, handelt es sich um gleich aufgebaute bzw. gleich wirkende Komponenten oder Verfahrensabläufe bzw. Signale und Daten.

Der Knoten Kn weist als eine erste Komponente wieder das Sende-/Empfangsmodul IO auf. Dieses umfasst vorzugsweise ein Empfangsmodul EM, welches zum Empfangen bzw. Erhalten der Sendesignale sei weiterer Knoten ausgebildet ist. Insbesondere nimmt das Empfangsmodul EM bereits eine erste Vorverarbeitung der empfangenen Sendesignale sei vor. So werden von den empfangenen Sendesignalen sei die globalen Uhrzeiten gci und die denen zugeordneten Konfidenzwerte di einem Zeitstempel TS zugeführt, in welchem zumindest diese Datenanteile, das heißt die empfangene globale Uhrzeit gci und der zugeordnete Konfidenzwert di, die lokale Empfangs-Uhrzeit lc1 zugeordnet bekommen, welche der momentanen lokalen Uhrzeit lcn des Knotens Kn entspricht. Vorteilhaft ist die Zuordnung mittels des Zeitstempels TS bereits im Bereich des Sende-/Empfangsmoduls IO, da dadurch keine Verarbeitungszeit verlorengeht und die Kennzeichnung der empfangenen Daten möglichst zeitnah mit der lokalen Empfangs-Uhrzeit lc1 durchgeführt werden kann. Optional kann eine Ausbreitungsdauer geschätzt und bei Berechnungen berücksichtigt werden.

Optional kann mit dem Zeitstempel TS auch das jeweils empfangene Abweichungsmaß vi mit der lokalen Empfangs-Uhrzeit lc1 versehen werden. Bei der dargestellten Ausführungsvariante wird jedoch bevorzugt, die empfangenen Abweichungsmaße vi direkt einem Abstimmungsmodul VM anzulegen.

Die mit der lokalen Empfangs-Uhrzeit lc1 versehenen globalen Uhrzeiten gci (lc1) und die diesen zugeordneten Konfidenzwerte di(lc1) werden einem Zustandsschätzer KF zugeführt. Der Zustandsschätzer KF bestimmt mittels der in diesem gehaltenen Daten eine globale Uhrzeit (gcn) für diesen Knoten Kn. Außerdem bestimmt der Kalmanfilter oder ein anderer Bestimmungs- oder Schätzungsprozess in dem Zustandsschätzer KF zu der bestimmten globalen Uhrzeit gcn des Knotens Kn zusätzlich einen Konfidenzwert dn für diese bestimmte globale Uhrzeit gcn. Diese werden von dem Zustandsschätzer ausgegeben und zur weiteren Verarbeitung in dem Knoten Kn bereitgestellt. Vorzugsweise bestimmt der Zustandsschätzer KF bei diesem Prozess zugleich eine zeitliche Drift dr zwischen der lokalen Uhr LCn und der globalen Uhr GCn bzw. zwischen der lokalen Uhrzeit lcn und der globalen Uhrzeit gcn dieses Knotens Kn. Die Drift dr gibt an, mit welcher Geschwindigkeit die globale Uhr GCn und die lokale Uhr LCn des Knotens Kn auseinanderdriften.

Die derart bestimmten Parameter, das heißt insbesondere die globale Uhrzeit gcn, deren Konfidenzwert dn und die Drift dr werden vom Zustandsschätzer KF einem Vertraulichkeitsschätzer VS angelegt. Der Vertraulichkeitsschätzer VS bestimmt für einen bestimmten Zeitpunkt ts(lcn*) der lokalen Uhrzeit lc das dann gültige Abweichungsmaß vn für die dann gültige globale Uhrzeit gcn dieses Knotens Kn sowie deren Konfidenz. Dieses Abweichungsmaß vn wird vorzugsweise ebenfalls als zu den empfangenen Abweichungsmaßen vi zusätzliches Abweichungsmaß vn an das Abstimmungsmodul VM angelegt.

Außerdem werden die Parameter des Zustandsschätzers KF, insbesondere die globale Uhrzeit gen, der Konfidenzwert dn und das Abweichungsmaß vn einem Sendeparametermodul zugeführt, welches ausgelegt ist, ein Sendesignal scn zum Aussenden aus diesem Knoten Kn bereitzustellen. Das Bereitstellen des Sendesignals scn erfolgt so, dass für einen zukünftigen geplanten Sendezeitpunkt ts(lcn*) zu einer zukünftigen lokalen Zeit lcn die dann aus Sicht dieses Knotens Kn geltende globale Uhrzeit gcn mit den dann zugehörigen Parametern, das heißt dem Konfidenzwert dn und dem Abweichungsmaß vn bereitgestellt wird.

Dieses derart für einen zukünftigen Zeitpunkt bestimmte und bereitgestellte Sendesignal scn wird dann einem Sendemodul S des Sende-/Empfangsmoduls IO bereitgestellt, um von dem Sendemodul S zu dem richtigen, vorbestimmten zukünftigen Sendezeitpunkt ts(lcn*) ausgesendet zu werden.

Eine weitere vorteilhafte Komponente ist ein Globaleingriffsmodul GM, welches einen Globaleingriffsparameter ge für den Zustandsschätzer KF erzeugt und letzterem anlegt. Der Globaleingriffsparameter ge dient dazu, die Parameter im als Kalmanfilter ausgebildeten Zustandsschätzer entsprechend zu ändern, wenn eine Abstimmung in dem Abstimmungsmodul VM ein Abstimmungsergebnis erg liefert, welches einen Globaleingriff erforderlich macht. Außerdem stellt das Globaleingriffsmodul GM ein Rückstellsignal rst für das Abstimmungsmodul VM bereit. Das Rückstellsignal rst veranlasst, die Abweichungsmaße im Speicher zu verwerfen, die zum Globaleingriff geführt haben. Auf diese Weise wird verhindert, dass ein solches Abweichungsmaß Eingang in mehrere Abstimmungen findet.

Außerdem kann optional ein Lokaleingriff mittels eines Lokaleingriffsmoduls LM durchgeführt werden, um Parameter in der lokalen Uhr LCn zu ändern. Weiterhin kann der Lokaleingriffparameter im Zustandsschätzer KF bzw. in dessen Kalmanfilter sowie optional in einem Trimmer TM zur Anpassung von deren Parametern eingesetzt werden. Dazu erhält das Lokaleingriffsmodul LM vom Zustandsschätzer KF ein Lokaleingriffs-Ansteuersignal. Außerdem werden von dem Lokaleingriffsmodul LM wiederum entsprechende lokale Korrektursignale 12, 13, an die lokale Uhr lcn bzw. an das Trimmmodul TM angelegt. Ein Zustandsschätzer-Korrektursignal 11 wird von dem Lokaleingriffsmodul LM an den Zustandsschätzer KF angelegt, um im Falle eines Lokaleingriffs nicht nur die lokale Uhrzeit lcn anzupassen sondern auch im Zustandsschätzer auf diese lokale Uhrzeit bezogene Größen, insbesondere die lokale Empfangs-Uhrzeit lc1, welche mit den empfangenen Sendesignalparametern verknüpft ist, entsprechend der Änderung der lokalen Uhrzeit lcn ebenfalls zu ändern, und zwar in einer solchen Weise zu ändern, dass die globale Uhr hiervon möglichst unbeeinflusst weiterläuft.

Für den Fall, dass ein optionales Trimmmodul TM vorgesehen wird, kann dieses ausgelegt sein, aufgrund des vom Lokaleingriffsmodul LM angelegten Steuersignals 13 ein Trimmsignal für den Vertraulichkeitsschätzer VS und ein Trimmsignal to für den Oszillator OS und/oder die lokale Uhr LCn bereitzustellen. Der lokale Oszillator OS dient wiederum dazu, ein geeignetes Taktsignal an die lokale Uhr LCn anzulegen. Optional kann der Oszillator OS aber auch weitere Komponenten der Schaltungsanordnung mit diesem oder mit anderen Taktsignalen versorgen.

Der dargestellte Knoten Kn verfügt zusätzlich über eine optionale weitere Schnittstelle des Sende-/Empfangsmoduls, um Signale von einer Referenz-Zeitquelle XC zu empfangen. Dabei kann es sich insbesondere um ein GPS-Signal des Global-Positioning-Systems (GPS) oder um ein genormtes Zeitsignal gemäß beispielsweise dem Zeitsignal dcf des DCF-Standards handeln. Derart empfangene Signale werden als eine externe globale Uhrzeit gci* von dem Sende-/Empfangsmodul IO als weitere globale Uhrzeiten bereitgestellt. Da diese externen globalen Uhrzeiten gci* jedoch weder einen Konfidenzwert di* noch ein Abweichungsmaß aufweisen, da solche Parameter von deren Zeitquellen nicht vorgesehen werden, weist das Sende- /Empfangsmodul IO vorzugsweise zusätzlich ein Vertrauchlichkeits-Zuordnungsmodul XCV zum Zuordnen eines geeigneten Konfidenzwertes di* und/oder eines zugeordneten Abweichungsmaßes vi* auf. Dadurch können die empfangenen externen globalen Uhrzeiten gci* durch die weiteren Komponenten und Verfahrensabläufe des Knotens Kn genauso behandelt werden, wie die von anderen Knoten empfangenen Sendesignale sei bzw. deren Daten.

Bei den diversen Modulen kann es sich auch um eine kombinierte Anordnung mit gegebenenfalls sogar nur einem einzigen Prozessor und entsprechenden Anschlüssen handeln, welcher mit Hilfe eines reinen Software-Algorithmus die entsprechende Datenverarbeitung durchführt. Prinzipiell können die einzelnen Module jedoch auch durch Hardware-Komponenten oder kombinierte Hard- und Software-Komponenten ausgebildet sein. In dem Speicher M oder einer weiteren Speichereinrichtung können entsprechende Programme gespeichert sein, um die verschiedenen Verfahrensabläufe geeignet anzusteuern.

Um den Grundgedanken der bevorzugten Verfahrensweise und Schaltungsanordnung zu erläutern, zeigt Fig. 3 drei Knoten K1, K2, K3, welche über einen oder mehrere Kanäle CH kommunizieren. Jeder der Knoten K1 - K3 führt in einer Regelungseinrichtung 2 eine entsprechende Regelung der globalen Zeiten durch. Im Idealfall kommen dabei theoretisch alle Knoten K1 - K3 zu derselben globalen Uhrzeit. In der Realität werden die globalen Uhrzeiten jedoch stets zumindest geringfügig voneinander abweichen, da die einzelnen Komponenten in den verschiedenen Knoten K1 - K3 nicht identisch gleich sind und somit stets Schwankungen hinsichtlich des Zeitverlaufs der internen Uhren aufweisen werden. Die derart bestimmten globalen Zeiten der verschiedenen Knoten K1 - K3 werden wie von einem virtuellen Master 1 dann an die übrigen Knoten K1 - K3 verteilt, was innerhalb der einzelnen Knoten K1 - K3 wie eine Messung bzw. der Empfang einer Referenzzeit gewertet wird. Mit anderen Worten ist dieses System vergleichbar mit einer Baumstruktur, bei welcher ein virtueller Master 1 eine Zeitvorgabe für die verschiedenen untergeordneten Knoten K1 - K3 vornimmt. Dieser virtuelle Master wird durch ein gewichtetes Zusammenwirken der Knoten K1-K3 selbst gebildet. Der Unterschied gegenüber einem tatsächlichen Master besteht daher darin, dass nicht eine einzige Referenzzeit für die einzelnen Knoten K1 - K3 vorgegeben wird, sondern dass den einzelnen Knoten K1 - K3 eine Vielzahl verschiedener globaler Zeiten zugesendet wird, woraufhin die einzelnen Knoten K1 - K3 dann durch deren Zustandsschätzer versuchen, aus den empfangenen globalen Uhrzeiten eine eigene globale Uhrzeit zu bestimmen. Mit dieser wird dann der Knoten K1 - K3 jeweils selber angesteuert und außerdem durch Übertragung zu den weiteren Knoten K1 - K3 eine Synchronisierung auch dieser weiteren Knoten K1 - K3 ermöglicht.

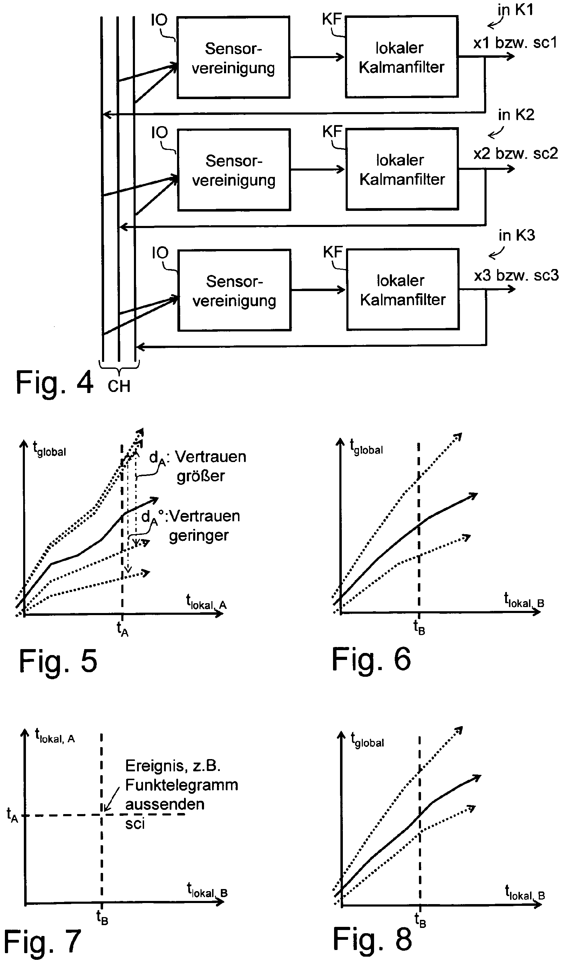

Fig. 4 zeigt eine weitere Anordnung zur Veranschaulichung des Grundgedankens. Über einen oder mehrere Kanäle CH kommunizieren die einzelnen Knoten K1 - K3. Dabei findet eine Sensorvereinigung durch deren Sende-/Empfangsmodule IO statt, bei welcher die globalen Uhrzeiten bzw. Sendesignale sc1 - sc3 von den jeweils anderen Sensoren bzw. Knoten empfangen werden. Die empfangenen und mit einem Zeitstempel markierten Daten werden dann einem jeweiligen Zustandsschätzer KF zugeführt, welcher als vorzugsweise lokaler Kalmanfilter ausgebildet ist und eine erneute Bestimmung einer globalen Uhrzeit vornimmt. Die entsprechende globale Uhrzeit, ein Systemzustand x1 - x3 bzw. ein entsprechendes Sendesignal sc1 - sc3 werden dann für weitere Prozesse innerhalb der Knoten K1 - K3 bereitgestellt bzw. wieder über den oder die Kanäle CH übertragen.

Mit anderen Worten besteht ein Grundaspekt des Verfahrens bzw. der Schaltungsanordnung zur Zeitsynchronisierung von Uhren in Knoten darin, dass auf mehreren solcher Knoten Zustandsschätzer implementiert werden. Mit dem Begriff Zustandsschätzer KF ist im Rahmen der vorliegenden Beschreibung ein mathematisches Modell bzw. dessen technische Umsetzung durch Hard- und/oder Software zu verstehen, dass unter Einbeziehung von Messdaten bzw. empfangenen Daten anderer Knoten Ki den Zustand des Modells möglichst gut an den Zustand des realen modellierten Systems annähert. Diese Zustandsschätzer KF können unter anderem auf einem Kalman Filter, einem Partikel-Filter, einem adaptiven Filter, Monte-Carlo-Methoden und/oder Modellen basierend auf Bayes'scher Statistik beruhen.

Die Zustandsschätzer KF sind so ausgestaltet, dass sie mit jeweils der lokalen Taktquelle bzw. lokalen Uhrzeit lcn, lci eine globale Uhrzeit gcn, gci mit der zugehörigen Konfidenz dn, di schätzen. Unter dem Begriff Uhr LCi, LCn, GCi, GCn ist vorliegend eine Takt- und/oder Zeitmess-Einrichtungen zu verstehen. Kennwerte einer solchen Uhr sind ihre Laufgeschwindigkeit, d.h. ihre Taktrate, sowie die absolute Uhrzeit d.h. ein Zählerstand bzw. eine Zahl bezogen auf einen vereinbarten zeitlichen Bezugspunkt innerhalb des jeweiligen Knotens Kn, Ki. Die Knoten Ki, Kn sind so auszugestalten, dass sie das Ergebnis einer lokalen Zustandsschätzung auf einem ersten Knoten Ki, Kn einem anderen Zustandsschätzer KF auf zumindest einem anderen zweiten Knoten Kn, Ki mitteilen können. Vorliegend nutzt der Zustandsschätzer KF auf diesem zweiten Knoten Kn, Ki die Zustandsschätzung von dem ersten Knoten Ki, Kn nun als Eingangswert für seine eigene Zustandsschätzung. Dieser kooperative Vorgang wird vorzugsweise wechselseitig zwischen allen Knoten Ki, Kn durchgeführt.

Prinzipbedingt ergibt sich bei der vorgeschlagenen Anordnung kein Masterknoten, sondern die Zustandsschätzer auf den einzelnen Knoten sind derartig miteinander verbunden, dass sie zu einer konsistenten gemeinsamen Zeitdarstellung bzw. zu einer gemeinsamen fiktiven globalen Uhrzeit konvergieren. Von außen betrachtet liefern die globalen Uhren der verschiedenen Knoten im Idealfall gleiche oder fast gleiche globale Uhrzeitwerte.

In den beschriebenen Verfahren und Anordnungen zeigt sich das allgemeine Prinzip des neuartigen kooperativen Zustandsschätzers. Ein besonderer Vorteil gegenüber den bekannten üblichen verteilten Kalmanfiltern mit eingebetteten Konsensfiltern ist die Tatsache, dass der neuartige kooperative Zustandsschätzer auch bei langsamer Taktung konvergiert. Beim bekannten verteilten Kalmanfilter würde dies nicht funktionieren, da Änderungen zu schnell erfolgen würden, um mit einer langsamen Taktung erfasst und korrigiert zu werden. Diese Konvergenz wird durch den folgenden Ablauf, der die Verzögerung durch die Zustandsschätzung berücksichtigt, ermöglicht.

Der besonders bevorzugte Ablauf ist wie folgt:
Der erste Knoten Kn plant eine Sende-Uhrzeit bzw. den Sendezeitpunkt ts(lcn*), zu dem er eine Zustandsschätzung aussendet. Für exakt diese zukünftige Sende-Uhrzeit schätzt er dann seinen Zustand, d.h. seine globale Uhrzeit gcn. Wenn der Sendezeitpunkt ts(lcn*) erreicht ist, sendet der erste Knoten Kn diese Zustandsschätzung aus, die dann von einem zweiten Knoten Ki empfangen werden kann. Der zweite Knoten Ki bestimmt den Eintreffzeitpunkt des Empfangssignals und/oder mithilfe einer Ausbreitungsdauerschätzung den Sendezeitpunkt des empfangenen Signals und ermittelt aus seiner alten bestehenden Schätzung und der empfangenen Schätzung in Verbindung mit dem Eintreffzeitpunkt bzw. Sendezeitpunkt eine neue verbesserte eigene Schätzung von der globalen Uhrzeit gci des zweiten Knotens Ki. Diese Schätzung wird vorzugsweise dann wiederum anderen Knoten zur Verfügung gestellt, wie dies in Fig. 1 oder 4 skizziert ist.

Bevorzugt werden als die Zustandsschätzer KF die kooperativen Kalmanfilter zur Synchronisation eingesetzt, indem sie so ausgelegt werden, dass sie den Zustand einer globalen Uhr GCi, GCn schätzen. Wenn einzelne Stationen bzw. Knoten Ki, Kn über eine insbesondere externe Referenz-Zeitquelle XC mit einem Signal gemäß z.B. DCF, GPS, ... verfügen, so werden diese als Sensoren betrachtet, die Auskunft über den Zustand der globalen Uhr GCi, GCn geben. Da übliche Zeitquellen XC kein Konfidenzmaß bereitstellen ist ein geeignetes richtig bemessenes Konfidenzwert di* zu ermitteln und deren Werten zuzuordnen. Dies kann durch Schätzen, physikalische Überlegungen, Messungen oder heuristisch geschehen.

Die kooperativen Kalmanfilter in den Zustandsschätzern KF der verschiedenen Knoten Kn, Ki konvergieren zu einer maximal konsistenten Zustandsschätzung für jeweils eine globale Uhr GCn und stellen auf diese Weise eine fiktive gemeinsame Zeitskala zur Verfügung.

Dabei ist es vorteilhaft, dass die kooperativen Kalmanfilter auch dann zu einer konsistenten Zustandsschätzung konvergieren, wenn keine externen Referenz-Zeitquellen XC gemäß z.B. dem GPS- oder dem DCF-Standard vorhanden sind.

Wenn keine Sensorinputs in Form von insbesondere Echtzeitquellen vorhanden sind, dann ist ein zusätzlicher erfindungsgemäßer Mechanismus nötig, um die globalen Uhren in ihrer Geschwindigkeit nahe der realen Zeit zu halten. Andernfalls kann es sein, dass die kooperierenden Kalmanfilter zwar zu einer konsistenten Darstellung konvergieren, die jedoch deutlich zu schnell oder zu langsam läuft. Um dies zu verhindern, führen vorzugsweise alle beteiligten Stationen regelmäßig einen Vergleich zwischen ihrer realen lokalen Uhr LCn, LCi und ihrer globalen Uhr GCn durch. Durch einen Konsensmechanismus bzw. eine Abstimmung die mehrere, vorzugsweise alle Knoten Kn, Ki durchführen, wird zum einen entschieden, ob ein Regeleingriff in die globale Uhrzeit gcn, gci erfolgen soll, und zum anderen entschieden, ob die globale Uhrzeit gcn, gci verlangsamt oder beschleunigt werden soll. Auf diese Weise wird erreicht, dass die globale Uhrzeit gcn, gci in der Regel frei laufen kann und daher sehr gleichmäßig die Zeit einteilt, dass sie aber dennoch in ihrer Laufgeschwindigkeit nicht aus einem bestimmten Quantil der Laufgeschwindigkeiten realer Uhren der beteiligten Knoten Kn, Ki ausbrechen kann. Abhängig von der Anwendung und dem verwendeten Konsensmechanismus ist dieses Quantil geeignet zu wählen. Eine geeignete Wahl wäre z.B., dass die globale Uhrzeit gcn, gci nicht aus dem 33%-66%-Quantil der beteiligten Knoten Kn, Ki ausbrechen kann. Anders ausgedrückt wird ein Regeleingriff vorgenommen, der die Taktrate der globalen Uhr erhöht, wenn sie in das Quantil unter 33% als einem Niedriggeschwindigkeits-Schwellwert fällt, und verringert, wenn sie in das Quantil über 66% als einem Hochgeschwindigkeits-Schwellwert gelangt. Die Größe des Regeleingriffes ist so zu bemessen, dass sie einerseits nicht zu groß ist, da es dann zu Instabilitäten kommen kann, andererseits zumindest so groß sein muss, dass die globale Uhr nicht weiter in das untere bzw. obere Quantil vordringt, d.h. nicht weiter in die falsche Richtung abwandert.

Der Gesamtablauf ergibt sich dann wie folgt: Die Uhren in einem Kommunikationsnetz werden synchronisiert, indem auf mehreren Knoten lokale Zustandsschätzer KF implementiert sind, welche die globale Uhrzeit gcn, gci mit Hilfe einer lokalen Uhrzeit lcn, lei schätzen und diese geschätzte globale Uhrzeit gen, gci mit Hilfe von Kommunikation im Netz anderen Knoten Ki, Kn zur Verfügung stellen, welche ihrerseits eine lokale Schätzung von deren globalen Uhrzeiten gcn, gci dadurch verbessern können. Dies ist beispielhaft in den Fig. 5 bis 8 erläutert. Fig. 5 und 6 zeigen für entsprechende Zustandsschätzer den Verlauf der globalen und lokalen Zeitskalen $t_{lokal,A}$ und $t_{lokal,B}$ zweier Knoten A und B gegenüber deren jeweiligen globalen Uhrzeiten $t_{global,A}$ und $t_{global,B}$. Die Abweichung der Kennlinie von einer den Quadranten halbierenden Geraden beruht dabei auf den unterschiedlichen Änderungen der lokalen und der globalen Uhrzeit. Die gestrichelten Linien geben mögliche weitere Verläufe der lokalen und der globalen Uhrzeiten beispielhaft an.

Fig. 7 zeigt den Zeitpunkt eines Ereignisses, z.B. die Aussendung eines Funktelegrammes, welches das Sendesignal sei eines anderen Knotens Ki enthält, laut Zustandsschätzer von Knoten A. Diesem Ereignis werden die entsprechenden lokalen bzw. globalen Zeitpunkte bzw. die lokale Empfangsuhrzeit lc1 (Fig. 1, 2) zugeordnet. Da Ereignisse nur mit einer bestimmten Genauigkeit bekannt sind, ergibt sich eine Wahrscheinlichkeitsverteilung für die physikalische globale Uhrzeit - des Ereignisses, während die lokale Empfangsuhrzeit lc1 durch den Empfänger bestimmt werden kann..

Fig. 8 zeigt den sich daraus ergebenden Verlauf von globaler Uhrzeit zu lokaler Uhrzeit gegenüber Fig. 6 durch die vom bevorzugten Algorithmus vorgenommenen Korrekturen.

Dargestellt ist die genauere Schätzung in Knoten B, nach Berücksichtigung der Daten von Knoten A. Deutlich zu erkennen sind die geringeren Abweichungen der Uhrzeiten zueinander im Verlauf.

Eine Möglichkeit, diese Grundaspekte umzusetzen, ist z.B. die Nutzung von lokalen Kalmanfiltern in den Zustandsschätzern KF.

Kalmanfilter operieren auf einer Zustandsraumdarstellung des zu beobachtenden Systems. Das Modell, das in diesem Fall zur Anwendung kommt, ist jenes einer lokalen Uhr lcn, die von der eigenen globalen Uhr gen durch einen Offset $\delta$ und eine unterschiedliche Laufgeschwindigkeit $\varphi_{n,k}$ der lokalen Uhr LCn gegenüber der globalen Uhr GCn abweicht.

$$x_{n,k} = \begin{pmatrix} \delta_{n,k} \\ \varphi_{n,k} \end{pmatrix}$$

als Systemzustand $x_{n,k}$ im n-ten Knoten Kn zum diskreten Zeitpunkt k enthält diese Parameter und bildet eine geschätzte Transformation

$$t_{n,global} = t_{n,lokal} + \delta_{n,k} + \varphi_{n,k} \cdot (t_{lokal} - lastupdate_n)$$

zwischen der lokalen und der globalen Uhr LCn, GCn bzw. zwischen deren Uhrzeiten lcn, gcn des Knotens n zum diskreten Zeitpunkt k ab.

Weiterhin wird festgehalten, zu welchem Zeitpunkt einer Lokalzeit $lastupdate_{n,k}$ dieser Zustand der lokalen Uhr LCn vorliegt und $lastupdate_{n,k}$ als Lokalzeit des aktuellsten Systemzustands $x_{n,k}$ im Knoten Kn belegt.

Damit lautet der aktuell geschätzte globaler Zeitpunkt $t_{n,global}$ der Transformation des Systemzustands $x_{n,k}$ des Knoten Kn

$$t_{n,global} = t_{n,lokal} + \delta_{n,k} + \varphi_{n,k} \cdot (t_{lokal} - lastupdate_n).$$

D.h., wird einem Ereignis von Knoten Kn der lokale Zeitwert $t_{n,lokal}$ zugeordnet, so findet das Ereignis laut der Schätzung von Knoten Kn zum globalen Zeitpunkt $t_{n,global}$ statt.

Ein solches Ereignis ist insbesondere der zukünftige Sendezeitpunkt ts(lcn*), zu welchem der Knoten Kn seine von ihm berechnete globale Zeit gcn an die anderen Knoten aussendet. Der für diesen zukünftigen Sendezeitpunkt ts(lcn*) prognoszierte Offset do ergibt sich zu

$$do = \delta_{n,k} + \varphi_{n,k}(t_{lokal} - lastupdate_n).$$

Zusätzlich zum als Zustandsvektor abbildbaren Systemzustand $x_{n,k}$, der den geschätzten Systemzustand darstellt, wird eine Fehlerkovarianzmatrix

$$P_{n,k} = \begin{pmatrix} \sigma^2_{\delta_{n,k}} & \sigma_{\delta_{n,k},\varphi_{n,k}} \\ \sigma_{\delta_{n,k},\varphi_{n,k}} & \sigma^2_{\varphi_{n,k}} \end{pmatrix}$$

mit σ als statistischem Symbol für die Kovarianz geführt, die die Genauigkeit Pn,k der Systemschätzung wiedergibt.

Die Genauigkeit Pn,k oder eine daraus abgeleitete Größe wird als Konfidenzwert dn bzw. di des Knotens Kn bzw. der weiteren Knoten Ki, i≠n, bereitgestellt. Vorzugsweise wird der Konfidenzwert dn als der globalen Uhrzeit gcn zugeordnete Größe in diesem Knoten Kn zur Bestimmung seiner globalen Uhrzeit gcn verwendet. Das Aussenden zusammen mit der globalen Uhrzeit gcn ermöglicht auch weiteren Knoten Ki, die voraussichtliche Genauigkeit bzw. Konfidenz der empfangenen globalen Uhrzeit gen mit zu berücksichtigen. Der Konfidenzwert dn bzw. di kann insbesondere diese Fehlerkovarianzmatrix oder eine Kovarianzmatrix, welche weitere Störgrößen berücksichtigt, umfassen oder unter deren Berücksichtigung bestimmt werden.

Sofern keine Messergebnisse, insbesondere empfangene globale Uhrzeiten gci und/oder GPS-Zeitsignale etc. zur Verfügung stehen, lässt sich die Entwicklung des Systems durch die sich aus dem System ergebende Systemgleichungen abschätzen mit einer Systemmatrix

$$A_{n,k} = \begin{pmatrix} 1 & (now_n - lastupdate_n) \\ 0 & 1 \end{pmatrix}.$$

Mit $now_n$ als zukünftigem Wert zu $lastupdate_n$ ist der neue Systemzustand in Knoten Kn

$$\hat{x}_{n,k+1} = A_{n,k} \cdot x_{n,k}.$$

Die neue Fehlerkovarianzmatrix lautet

$$\hat{P}_{n,k+1} = A_{n,k+1} P_{n,k} A_{n,k+1}^T + Q_{n,k+1}.$$

Um Modellfehlern Rechnung zu tragen, wird dabei die Fehlerkovarianzmatrix um eine Modellfehlermatrix $Q_{n,k}$ vergrößert. Dabei wird Einflüssen Rechnung getragen, die in der Realität vorkommen, die aber nicht durch die Systemmatrix wiedergegeben werden.

Zu solchen Einflüssen zählen insbesondere Offseteänderungen der globalen und der lokalen Uhr GCn, LCn durch Phasenrauschen der lokalen Uhr LCn aufgrund von Fehlern des Oszillators, Frequenzänderungen durch Spannungsschwankungen der Oszillatorspannung, Frequenzänderungen durch Temperaturveränderungen des Oszillators und Frequenzänderungen durch unerwünschte parasitäre Kapazitäten des Oszillators und ggfs. der die Uhr ausbildenden und umgebenden Schaltungsanordnungen.

Weiterhin wird vorzugsweise beachtet, dass es bei den numerischen Berechnungen der Systemgleichung zu üblichen Rundungen kommt. Diese können auch als Modellfehler betrachtet werden.

Sofern das Phasenrauschen in der Anwendung keine relevante Größe erreicht, kann die Modellfehlermatrix angesetzt werden als

$$Q_{k+1} = \begin{pmatrix} 0 & 0 \\ 0 & dDrift \cdot \Delta t \end{pmatrix}.$$

Dabei ist dDrift eine Konstante zur Abschätzung einer Drift des Oszillators und damit der lokalen Uhr bezüglich einer physikalischen Zeit. Ein praktikabler Wert bei der Verwendung ungeheizter Quarzoszillatoren als lokaler Taktquelle lag im Rahmen erster Versuche bei 0,0125 ppm$^2$/s.

Wenn Messungen, d.h. insbesondere der Empfang von GPS-Zeit etc. oder auch globalen Uhrzeiten gci anderer Knoten Ki gemacht werden, so sollte zweckmäßig neben den einzelnen Messwerten M die Genauigkeit der Messungen bekannt sein. Diese wird angegeben durch eine Kovarianzmatrix R. Gemessen wird der aktuelle Offset $y_{k+1}$ zwischen der eigenen Schätzung des globalen Zeitpunkts $t_{global,n}$ eines Knotens Kn für ein im Knoten Kn stattfindendes oder empfangenes Ereignis E einerseits und andererseits dem von einem anderen sendenden Konten Ki i≠n mitgeteilten globalen Zeitpunkt $t_{i,global}$ dieses Ereignisses. Damit gilt zum Zeitpunkt k+1 für den aktuellen Offset

$$y_{k+1} = \text{gemessener aktueller Offset.}$$

Die Drift kann in der Regel nicht gemessen werden, sondern muss meist durch den Kalmanfilter geschätzt werden. Da der gemessene Offset $y_{k+1}$ als verarbeitbare Größe ein eindimensionaler Vektor ist, hat die Kovarianzmatrix R die Größe 1x1 und enthält nur die Streuung $R_{k+1}$ des Messwertes M. Es gilt

$$R_{k+1} = \left( \sigma^2_{y_{k+1}} \right).$$

Die Streuung $R_{k+1}$ des Messwerts M dieser Offsetmessung setzt sich zusammen aus einem Anteil der durch die Konfidenz der sendenden Station bestimmt ist, der Ungenauigkeit der Bestimmung der Laufzeit des Funktelegramms und der Ungenauigkeit bei der Bestimmung des Empfangszeitpunktes.

Um nun mit Hilfe der Messwerte die Zustandsbeschreibung des Systems zu verbessern, wird eine Gewichtung zwischen der a-priori-Schätzung aus der Entwicklung des Zustandsvektors $x_{n,k}$ und den Messergebnissen verschiedener empfangener Messwerte etc. vorgenommen. Vorzugsweise wird jeder Messwert individuell direkt verarbeitet. Dabei wird die Gewichtung so gewählt, dass die resultierende Varianzmatrix des Systems minimale Matrixnorm hat.

$$K = P_{k+1} C^T (CPC^T + R)^{-1}$$

ist der Kalman-Gain und

$$x_{n,k+1} = \hat{x}_{n,k+1} + K_{n,k+1} y_{n,k+1}$$

ist der Vektor, der die verbesserte Transformation darstellt.

Der lokale Kalmanfilter im Zustandsschätzer KF schätzt somit eine Transformation zwischen der lokalen Uhrzeit lcn des Knotens Kn und der globalen Uhrzeit gen dieses Knotens Kn. Diese Schätzung wird dem Zeitschlitzmanagement bereitgestellt, das damit Aktionen zu bestimmten globalen Uhrzeiten gcn auslösen kann, z.B. Sendevorgänge, ein Geben von Schaltflanken oder ein Betreiben eines HF-Empfangsteils.

Durch lokale Regeleingriffe wird vorzugsweise auch die lokale Taktquelle bzw. der Oszillator OS der globalen Uhr GCn nachgeführt und dadurch ein übermäßiges Anwachsen der Gleitpunktvariablen in entsprechend durchzuführenden Softwareprogrammen vermieden, was andernfalls einen Verlust von Darstellgenauigkeit zur Folge hätte.

Das Abstimmen zählt durch z.B. Addition oder gewichtete Addition die von anderen Stationen empfangen Stimmen bzw. Abweichungsmaße vi für ein Beschleunigen bzw. Abbremsen der vielen globalen Uhrzeiten gci, gcn aus und veranlasst im Eingriffsfalls den Eingriff in die jeweiligen globalen Uhren der verschiedenen Knoten Ki, Kn.

Die Sende- und/oder Empfangseinrichtung IO bzw. eine entsprechende Routine ist dafür verantwortlich, auf der gegebenen Hardware Daten in Form von insbesondere Funktelegrammen zu senden und zu empfangen und dabei die bestmögliche Genauigkeit bei der Bestimmung von Sende- und Empfangszeitpunkten zu ermöglichen.

Ein Ablauf bei Empfang eines Paketes besteht insbesondere in den nachfolgenden Schritten, welche insbesondere anhand Fig. 2 nachvollziehbar sind.

Die Sende- und/oder Empfangseinrichtung IO wickelt in einem ersten Schritt den Empfang des Paketes bzw. des empfangenen Sendesignals sei von anderen Knoten Ki ab und bestimmt den Empfangszeitpunkt lc1 als einem Zeitstempel laut der momentanen lokalen Empfangs-Uhrzeit (lcn) der lokalen Uhr LCn des Knotens Kn.

Das Paket bzw. empfangene Sendesignal sei und der zugeordnete Zeitstempel mit der lokalen Empfangs-Uhrzeit lc1 werden in einem zweiten Schritt an den Zustandsschätzer KF mit dem Kalman-Filter gegeben.

Der Kalman-Filter macht in einem dritten Schritt einen Vorhersageschritt zur lokalen Empfangsuhrzeit lcn hin, wobei in der vorstehenden Formel die Variable lastupdate so gesetzt wird, dass die neu gesetzte Variable lastupdate der neuen lokalen Empfangs-Uhrzeit lc1 entspricht.

Mithilfe der im Paket bzw. im empfangenen Sendesignal sei angegebenen empfangenen globalen Uhrzeit gci macht der Kalman-Filter in einem vierten Schritt einen Korrekturschritt. Ein Unterschied zum zweiten Schritt besteht darin, dass im dritten und vierten Schritt ein Ablauf im Kalmanfilter beschrieben wird.

In einem fünften Schritt, der auch vor oder parallel zu den Schritten zwei bis vier durchgeführt werden kann, gibt das Sende-/Empfangsmodul IO das Paket bzw. empfangene Sendesignal sei an das Abstimmungsmodul VM. Dabei ist das Sende/Empfangsmodul IO vorzugsweise so ausgestaltet, dass sich ein geringst möglicher Jitter bei der Weitergabe von Ereignissen an die restliche Hardware ergibt.

Letztendlich zählt in einem sechsten Schritt das Abstimmungsmodul VM die einzelnen erhaltenen Stimmen, die in Form der Abweichungsmaße vi, vn an dieses angelegt werden.

Außerdem wird ein regelmäßiger globaler Eingriff durchgeführt, um jeweils die globale Uhrzeit gcn des Knotens Kn an die empfangenen Uhrzeiten anzupassen.

Dazu ermittelt das Abstimmungsmodul das Ergebnis der Abstimmung über die angelegten Abweichungsmaße vn, vi. Danach wird ein Eingriff in die globale Uhr GCn bzw. die globale Uhrzeit gcn beschlossen, wobei vorzugsweise die Schwellwerte sh, st berücksichtigt werden. Schließlich passt der Zustandsschätzer KF bzw. dessen Kalman-Filter seine Transformations-Schätzung an die neue globale Uhrzeit gcn an.

Außerdem wird bevorzugt auch ein regelmäßiger lokaler Eingriff durchgeführt, um jeweils die lokale Uhrzeit lcn des Knotens Kn an die globale Uhrzeit gcn anzupassen.

Dazu wird die Transformation zwischen lokaler Uhr LCn und geschätzter globaler Uhr GCn betrachtet und bedarfsweise eine Manipulation der lokalen Uhr LCn bzw. der lokalen Uhrzeit lcn geplant um sie der globalen Uhrzeit gcn anzugleichen.

Die Steuereinrichtung C führt dann bei Bedarf einen geeigneten Eingriff durch, um z.B. die lokale Uhr bzw. den Oszillator OS durch eine geeignete parasitäre Kapazität zu bremsen bzw. zu beschleunigen.

Der Zustandsschätzer KF passt außerdem die Schätzung der Transformation im Kalman-Filter so an, dass die geschätzten globale Uhrzeit gcn unabhängig von der Anpassung der lokalen Uhrzeit lcn gleichmäßig weiterläuft.

Um anderen Knoten Ki ebenfalls eine Anpassung von deren globalen Uhrzeiten gci zu ermöglichen, wird außerdem bevorzugt ein regelmäßiger Sendevorgang durchgeführt.

In einem ersten Schritt wird dabei mittels z.B. eines Zeitschlitz-Managements eine Aussendung für einen bestimmten zukünftigen Zeitpunkt ts(lcn*) der lokalen Uhrzeit lcn geplant. In einem zweiten Schritt schätzt der Zustandsschätzer KF und/oder die Steuereinrichtung C für diesen zukünftigen Zeitpunkt ts(lcn*) die dann für diesen Knoten n geltende globale Uhrzeit gcn. In einem dritten Schritt werden alle für eine Zeitsynchronisation anderer Knoten Ki relevanten Informationen und/oder ggfs. Nutzdaten in das zu sendende Paket bzw. Sendesignal scn eingesetzt und ggfs. kodiert. Letztendlich wird das Sendesignal scn nachfolgend in einem vierten Schritt zum physikalisch zeitlich zukünftig geplanten lokalen Zeitpunkt ts(lcn*) bzw. einem entsprechenden globalen Zeitpunkt gcn des Knotens n von dessen Sende-/Empfangsmodul IO ausgesendet.

Hierbei ist eine Besonderheit, dass keine realen Sensoren, also keine exakten externen Uhren oder Zeitdienste, existieren. Die Kalman-Filter der Zustandsschätzer KF der verschiedenen Knoten Kn gelangen durch den Austausch von Zustandsschätzungen jeweils einer eigenen globalen Uhr gcn, gci zu einer gemeinsamen Zeitskala bzw. zu sich einander annähernden Zeitwerten der globalen Uhren gcn, gci.

Ein Nebeneffekt des völligen Verzichts auf reale Sensoren in Form von z.B. einer übergeordneten Masteruhr oder externen Referenz-Zeitquellen XC ist die Anfälligkeit des Gesamtsystems für sogenannte sich selbst erfüllende Prophezeiungen. Dies äußert sich z.B. in einer fiktiven globalen Uhr, die deutlich schneller läuft, als reale Uhren. Um dies zu verhindern, werden entweder einzelne Knoten Kn (Fig. 2), K2, K4 (Fig. 1) mit Möglichkeit zur Messung externer Zeitquellen versehen werden, oder das Netzwerk führt mittels des Abweichungsmaßes vn, vi ein Monitoring der globalen Uhr durch und sorgt durch abgestimmte Regeleingriffe in die globale Uhren für einen gleichmäßigen Lauf, mit akzeptabler Laufgeschwindigkeit.

Vorzugsweise kann ein entsprechendes Monitoring der fiktiven globalen Uhr wie folgt ausgeführt sein: Sobald mehr als zwei Drittel der Stationen bzw. Knoten Kn, Ki eine gleichartige Abweichung in der Laufgeschwindigkeit feststellen, wird ein Regeleingriff in die globale Uhr vorgenommen, der dieser Abweichung entgegenwirkt. Die gleichartige Abweichung in der Laufgeschwindigkeit ist erfassbar durch die mit den globalen Uhrzeiten empfangenen Abweichungsmaßen vn, vi. Auf diese Weise wird erreicht, dass die globalen Uhren in der Regel frei laufen können und daher sehr gleichmäßig die Zeit einteilen. Sie können so aber dennoch nicht aus dem z.B. 33%-66%-Quantil der beteiligten Knoten Kn, Ki ausbrechen. Die Bemessung des Quantils kann auch anders vorgenommen werden, z.B. mit höheren oder niedrigeren Schwellwerten.

Eine weitere erfindungsgemäße Aufführung umfasst Knoten mit höherer absoluter Zeitgenauigkeit, welche z.B. dem GPS-Zeitnormal entspricht. Pakete bzw. Daten dieser Konten werden dann im Abstimmungsverfahren mit höherer, dem Genauigkeitsgewinn gegenüber den anderen Knoten entsprechender Gewichtung berücksichtigt.

Das Verfahren bzw. solche Schaltungsanordnungen können vorteilhaft in Echtzeitnetzwerken, in auf TDMA basierenden Netzen und insbesondere auch in Ortungssystemen verwendet werden.

Eine besonders vorteilhafte Ausgestaltung ergibt sich, wenn ein solches Verfahren mit dem in WO 2003/047137 dargestellten Verfahren kombiniert wird. Das in WO 2003/047137 dargestellte Verfahren ermöglicht einen extrem genauen Vergleich von zwei Uhren durch Austausch von frequenzmodulierten Signalen.

Das Verfahren eignet sich also hervorragend, um den Eintreffzeitpunkt des vorzugsweise nach WO2003/047137 ausgestalteten Empfangssignals, das der zweite Knoten Ki empfängt, zu bestimmen. Der erste Knoten Kn müsste also ein Sendesignal / Telegramm generieren, das sowohl die Daten seiner Zustandsschätzung enthält, als auch ein Signal zur exakten Zeitmessung gemäß WO 2003/047137 zu generieren. Diese Kombination ermöglicht es beispielsweise Funkknoten besser als 1 ns genau und die Taktraten im ppb-Bereich genau zu synchronisieren. Mit derartig exakt synchronisierten Knoten Ki, Kn ist es dann sehr einfach möglich, so genannte TOA-(time of arrival / Ankunftszeit) oder TDOA- (time difference of arrival / Zeitdifferenz der Ankunftzeit) Ortungssysteme aufzubauen.

Bezugszeichenliste:

| | |
|---|---|
| da, da° | Konfidenzwert, Vertrauen umgekehrt proportional zu Größe von da, da° |
| dcf | externes Zeitsignal, insbes. DCF-Signal |
| dn, di | Konfidenzwert für gcn bzw. gci |
| di* | Konfidenzwert für gci* |
| do | prognoszierter Offset $\delta_{n,k} + \varphi_{n,k}(t_{lokal}-\text{lastupdate}_n)$ zu ts (lcn*) |
| dr | zeitliche Drift zwischen LCn und GCn |
| gci | globale Uhrzeit von Knoten Ki |
| gci* | externe globale Uhrzeit von XC |
| gcn | globale Uhrzeit in Knoten n |
| gps gst | externe Uhrzeit, insbes. GPS-Signal |
| i | Knoten-Laufindex, i = 1, 2, 3, ..., n, ..., I |
| lc1 | lokale Empfangs-Uhrzeit in Knoten n |
| lcn | lokale Uhrzeit in Knoten n |
| 12 | lokales Korrektursignal für LC1 |
| 13 | lokales Korrektursignal für TM |
| lcn* | zukünftige lokale Uhrzeit |
| lastupdate$_{n,k}$ | Lokalzeit des Zustandes der lokalen Uhr LCn |
| n | Laufindex des aktuell betrachteten Knotens |
| pcs | lokale Computerzeit |
| rst | Rückstellsignal |
| sei, scn | Sendesignal von Ki bzw. Kn als Ergebnis (gci, di, vi; gcn, dn, vn) der Zustandsschätzung |
| sh | Hochgeschwindigkeits-Schwellwert |
| st | Niedriggeschwindigkeits-Schwellwert |
| $t_{n,lokal}$ | aktuell geschätzter lokaler Zeitpunkt in Kn |
| $t_{n,global}$ | aktuell geschätzter globaler Zeitpunkt in Kn |
| to | Trimmsignal für LCn oder OS |
| tr | Trimmsignal für VS |
| ts(lcn*) | Sendezeitpunkt zu zukünftiger lokaler Uhrzeit lcn* |
| vi, vn | Abweichungsmaß für gci, gcn |
| $\delta_{n,k}$ | Offset in Knoten n zu Zeitpunkt k |
| $\varphi_{n,k}$ | Laufzeitunterschied zwischen lcn und gen $\begin{pmatrix} \delta_{n,k} \\ \varphi_{n,k} \end{pmatrix}$ Transformation von Kennwerten der von LCn zu denen von GCn |
| $\sigma$ | statistisches Kovarianz-Symbol |
| 1 | virtueller Master |
| 2 | Regelungseinrichtung für gci |
| C | Steuereinrichtung |
| CH | Kanal/Kanäle |
| EM | Empfangsmodul |
| GCn | globale Uhr in Knoten n |
| GM | Globaleingriffsmodul |
| IO | Sende-/Empfangsmodul |
| KF | Zustandsschätzer, insbes. Kalmanfilter |
| Ki, Kn | Knoten i, aktuell betrachteter Knoten n |
| LCn | lokale Uhr in Knoten n |
| LM | Lokaleingriffsmodul |
| M | Speicher |
| OS | Oszillator |
| PC | lokaler Computer |
| S | Sendemodul |
| SM | Sendeparametermodul, bestimmt scn(gcn, , dn, vn) für lcn* |

TM       Trimmmodul
TS       Zeitstempel
VM       Abstimmungsmodul für erg aus vi, vn
VS       Vertraulichkeitsschätzer für vn
XC       externe Referenz-Zeitquelle
XCV      Vertraulichkeits-Zuordnungsmodul

**Patentansprüche**

1.  Verfahren zur Synchronisation von Uhren in einem Netz mit einer Vielzahl von zumindest zwei Knoten (Ki, Kn, i=1,2,...,J, nei), wobei zumindest zwei dieser Knoten (Ki, Kn) miteinander kommunizieren können und jeweils eine lokale Uhr (LCi, LCn) aufweisen, wobei

    - in einem empfangenden dieser Knoten (Kn) von zumindest einem sendenden anderen solcher Knoten (Ki, i≠n) eine von diesem sendenden der Knoten (Ki, i≠n) ausgesendete globale Uhrzeit (gci, i≠n) des sendenden der Knoten (Ki, i≠n) empfangen wird,
    - abhängig von sowohl der empfangenen globalen Uhrzeit (gci, i≠n) des sendenden Knotens (Ki, i≠n) als auch einer lokalen Uhrzeit (Icn) der eigenen lokalen Uhr (LCn) des empfangenden Knotens (Kn) eine globale Uhrzeit (gen) dieses empfangenden Knotens (Kn) durch eine Steuereinheit (C) bestimmt oder geschätzt wird, und
    - die bestimmte oder geschätzte globale Uhrzeit (gen) des empfangenden Knotens (Kn) an den zumindest einen sendenden Knoten (Ki, i≠n) gesendet wird,
    wobei in dem zumindest einen sendenden der Knoten (Ki, i≠n) abhängig von sowohl der empfangenen globalen Uhrzeit (gen) des empfangenden Knotens (Kn) als auch einer lokalen Uhrzeit (Ici) der eigenen lokalen Uhr (LCi) eine globale Uhrzeit (gci) dieses sendenden Knotens (Ki, i≠n) durch eine Steuereinheit (C) bestimmt oder geschätzt wird, **dadurch gekennzeichnet, dass**
    in dem Knoten (Kn) ein Abweichungsmaß (vn) zwischen der eigenen globalen Uhrzeit (gen) und der eigenen lokalen Uhrzeit (Icn) und/oder zwischen der eigenen globalen Uhrzeit (gen) und der von dem anderen Knoten oder von den anderen Knoten empfangenen globalen Uhrzeit oder Uhrzeiten (gci) bestimmt oder geschätzt wird, wobei bei der Bestimmung bzw. Schätzung der globalen Uhrzeit (gen) von dem Knoten (Kn) ein Abweichungsmaß (vi) einer empfangenen globalen Uhrzeit (gci) eines anderen solchen Knotens (Ki) verwendet wird.

2.  Verfahren nach Anspruch 1, bei dem bei der Bestimmung bzw. Schätzung der globalen Uhrzeit (gen) im Knoten (Kn) auch die vorherige eigene globale Uhrzeit (gcn) des Knotens (Kn) mit verwendet wird.

3.  Verfahren nach Anspruch 1 oder 2, wobei bei der Bestimmung bzw. Schätzung der globalen Uhrzeit (gen) von dem Knoten (Kn) zusätzlich das Abweichungsmaß (vn) des eigenen Knotens (Kn) verwendet wird.

4.  Verfahren nach einem vorstehenden Anspruch, insbesondere nach Anspruch 3, bei dem

    - in zumindest zwei der Knoten (Ki (1≠n), Kn) jeweils eine Transformation vorgegebener Kennwerte der eigenen lokalen Uhrzeit (Icn) zu Kennwerten einer globalen Uhr (GCn) derart bestimmt oder geschätzt wird, dass in den Knoten (Kn; Ki) jeweils zumindest ein solches Abweichungsmaß (vn; vi) als Entwicklung eines Verhältnisses zwischen der jeweiligen eigenen lokalen Uhr (LCn) und der eigenen globalen Uhr (GCn) bestimmt wird und
    - das Abweichungsmaß (vn; vi) eines der Knoten (Kn; Ki) in zumindest einem anderen solcher Knoten (Ki; Kn) als Eingangswert für die lokale Zustandsschätzung in zumindest diesem einen anderen Knoten (Ki; Kn) genutzt wird.

5.  Verfahren nach Anspruch 3 oder 4, bei dem

    - eine Korrektur zu einer langsameren Soll-Geschwindigkeit der globalen Uhrzeit (gcn) durchgeführt wird, wenn ein vorbestimmbarer Anteil der verfügbaren Abweichungsmaße (vn, vi) einen Hochgeschwindigkeits-Schwellwert (sh) überschreitet und/oder
    - eine Korrektur zu einer schnelleren Soll-Geschwindigkeit der globalen Uhrzeit (gcn) durchgeführt wird, wenn ein vorbestimmbarer Anteil der verfügbaren Abweichungsmaße (vn, vi) einen Niedriggeschwindigkeits-Schwellwert (st) unterschreitet.

6.  Verfahren nach einem vorstehenden Anspruch, bei dem in dem Knoten (Kn) zu dessen momentaner globaler Uhrzeit (gen) ein Konfidenzwert (dn) für die Bestimmung bzw. Schätzung dieser globalen Uhrzeit (gcn) bestimmt wird.

7. Verfahren nach Anspruch 6, bei dem im Knoten (Kn) beim Bestimmen bzw. Schätzen der globalen Uhrzeit (gcn) des Knotens (Kn) der Konfidenzwert (dn) der bisherigen globalen Uhrzeit des Knotens (Kn) mit verwendet wird und bei dem im Knoten (Kn) nach dem Empfangen der globalen Uhrzeit (gci) eines anderen Knotens (Ki) zusammen mit einem derartigen, dieser empfangenen globalen Uhrzeit (gci) zugeordneten Konfidenzwert (di) von dem empfangenden Knoten (kn) beim Bestimmen bzw. Schätzen der globalen Uhrzeit (gen) des empfangenden Knotens (Kn) die empfangene globale Uhrzeit (gci) und deren zugeordneter Konfidenzwert (di) verwendet wird.

8. Verfahren nach einem vorstehenden Anspruch, bei dem

   - im Knoten (Kn) die lokale Uhrzeit (lcn) dieses Knotens (Kn) um einen Zeitdifferenzwert zu der globalen Uhrzeit (gcn) dieses Knotens (Kn) angeglichen wird und
   - dabei auf die bisherige lokale Uhrzeit (lcn) bezogene Rechengrößen oder Parameter für die Schätzung oder Bestimmung der globalen Uhrzeit (gcn) dieses Knotens (Kn) derart angepasst werden, dass eine nachfolgende Schätzung oder Bestimmung der globalen Uhrzeit (gcn) dieses Knotens (Kn) durch die angeglichene lokale Uhrzeit (lcn) nicht beeinflusst wird.

9. Verfahren nach einem vorstehenden Anspruch, bei dem im Knoten (Kn) beim Bestimmen bzw. Schätzen der globalen Uhrzeit (gcn) des Knotens (Kn) zusätzlich eine externe Uhrzeit (gps) einer Referenz-Zeitquelle (XC) als eine zusätzliche externe globale Uhrzeit (gci*) verwendet wird, wobei die Referenz-Zeitquelle (XC) einem vom Netz der Knoten (Kn, Ki) unabhängigen Zeitsystem zugeordnet ist und/oder bei dem in Verbindung mit einem der Ansprüche 6 oder 7 der externen Uhrzeit (gci*) ein Konfidenzwert (dn*) abhängig davon zugeordnet wird, von welcher Art Zeitquelle die Referenz-Zeitquelle (XC) stammt.

10. Verfahren nach einem vorstehenden Anspruch, bei dem die bestimmte oder geschätzte globale Uhrzeit (gcn) des Knotens (Kn) zu einem zukünftigen Zeitpunkt ts(lcn*) an andere solche Knoten (Ki, i≠n) gesendet wird und vor dem Aussenden für den zukünftigen Zeitpunkt ts(lcn*) der dann geltende globale Zeitpunkt (gcn) oder der dann geltende globale Zeitpunkt (gcn) zusammen mit einem Abweichungsmaß (vn) und/oder mit einem Konfidenzwert (dn) bestimmt wird.

11. Verfahren nach einem vorstehenden Anspruch, wobei die globalen Uhrzeiten (gcn, gci) der Knoten (Kn, Ki) in einem weiteren dieser Knoten empfangen werden, wobei abhängig von sowohl der empfangen globalen Uhrzeiten als auch einer lokalen Uhrzeit der eigenen lokalen Uhr des weiteren empfangenden Knotens eine globale Uhrzeit dieses weiteren empfangenden Knotens bestimmt oder geschätzt wird.

12. Schaltungsanordnung zur Synchronisation von Uhren in einem Netz mit einer Vielzahl von zumindest zwei Knoten (Ki, Kn, i=1,2,...,J, n∈i), wobei zumindest zwei dieser Knoten (Ki, Kn) miteinander kommunizieren können und jeweils eine lokale Uhr (LCi, LCn) und einen lokalen Oszillator (OS) zum Takten der lokalen Uhr (LCi, LCn) aufweisen, wobei

   - zumindest ein empfangender dieser Knoten (Kn) ein Empfangsmodul (EM; IO) aufweist zum Empfangen einer ausgesendeten globalen Uhrzeit (gci, i≠n) zumindest eines sendenden solcher Knoten (Ki, i≠n)
   - eine Steuereinrichtung (C) aufweist, welche ausgestaltet und/oder steuerbar ist zum Bestimmen oder Schätzen einer globalen Uhrzeit (gcn) dieses empfangenden Knotens (Kn) abhängig von sowohl der empfangenen globalen Uhrzeit (gci, i≠n) des zumindest einen sendenden Knotens (Ki, i≠n) als auch einer lokalen Uhrzeit (lcn) der eigenen lokalen Uhr (LCn) des empfangenden Knotens (Kn) und
   - zumindest der empfangende dieser Knoten (Kn) ein Sendemodul (S; IO) aufweist zum Senden der bestimmten oder geschätzten globalen Uhrzeit (gcn) des empfangenden Knotens (Kn) von dem empfangenden Knoten (Kn) an den zumindest sendenden Knoten (Ki, i≠n),
   wobei der zumindest sendende der Knoten (Ki, i≠n) eine Steuereinrichtung (C) aufweist, welche ausgestaltet und/oder steuerbar ist zum Bestimmen oder Schätzen einer globalen Uhrzeit (gci) dieses sendenden Knotens (Ki, i≠n) abhängig von sowohl der empfangenen globalen Uhrzeit (gcn) des empfangenden der Knoten (Kn) als auch einer lokalen Uhrzeit (lci) der eigenen lokalen Uhr (LCi) dieses sendenden Knotens (Ki, i≠n), **dadurch gekennzeichnet, dass**
   wobei in dem Knoten (Kn) ein Abweichungsmaß (vn) zwischen der eigenen globalen Uhrzeit (gcn) und der eigenen lokalen Uhrzeit (lcn) und/oder zwischen der eigenen globalen Uhrzeit (gcn) und der von dem anderen Knoten oder von den anderen Knoten empfangenen globalen Uhrzeit oder Uhrzeiten (gci) bestimmt oder geschätzt wird, wobei bei der Bestimmung bzw. Schätzung der globalen Uhrzeit (gcn) von dem Knoten (Kn) ein Abweichungsmaß (vi) einer empfangenen globalen Uhrzeit (gci) eines anderen solchen Knotens (Ki) verwendet wird.

**13.** Schaltungsanordnung nach Anspruch 12 mit

- einem Zustandsschätzer (KF), der ausgestaltet und/oder steuerbar ist zum Bestimmen eines Konfidenzwerts (dn) in dem Knoten (Kn) zu dessen momentaner globaler Uhrzeit (gcn) und/oder
- in zumindest zwei der Knoten (Ki (i≠n), Kn) jeweils einem implementiert lokalen Zustandsschätzer (KF), der jeweils ausgestaltet und/oder steuerbar ist zum Bestimmen jeweils eines Abweichungsmaßes (vn; vi) als Entwicklung eines Verhältnisses zwischen der jeweiligen eigenen lokalen Uhr (LCn) und der eigenen globalen Uhr (GCn), wobei die jeweilige Steuereinrichtung (C) ausgestaltet und/oder steuerbar ist zum Verwenden des Abweichungsmaßes (vn; vi) eines der Knoten (Kn; Ki) in zumindest einem anderen solcher Knoten (Ki; Kn) als Eingangswert (di; dn) für die lokale Zustandsschätzung in zumindest diesem einen anderen Knoten (Ki; Kn).

**14.** Schaltungsanordnung nach Anspruch 12 oder 13 mit einem Abstimmungsmodul (VM), das ausgestaltet oder ansteuerbar ist zum Bestimmen oder Schätzen eines Abweichungsmaßes (vn) zwischen der eigenen globalen Uhrzeit (gcn) und der eigenen lokalen Uhrzeit (lcn) und/oder zwischen der eigenen globalen Uhrzeit (gcn) und einer von außerhalb des Knotens (Kn) empfangenen globalen Uhrzeit (gci).

**15.** Schaltungsanordnung nach einem der Ansprüche 12 bis 14, bei welcher die Steuereinrichtung (C) ausgestaltet und/oder steuerbar ist zum Durchführen eines Verfahren nach einem der Ansprüche 1 bis 10.

**Claims**

**1.** A method for synchronizing clocks in a network with a plurality of at least two nodes (Ki, Kn, i = 1,2,...,J, nEi), wherein at least two of these nodes (Ki, Kn) can communicate with one another and respectively comprise a local clock (LCi, LCn), wherein,

- in a receiving node (Kn) of these nodes, from at least one transmitting other node (Ki, i≠n) of such nodes, a global time (gci, i≠n) of the transmitting node (Ki, i≠n) of the nodes, which global time is transmitted by this transmitting node (Ki, i≠n) of the nodes, is received,
- depending on both the received global time (gci, i≠n) of the transmitting node (Ki, i≠n) and a local time (lcn) of the own local clock (LCn) of the receiving node (Kn), a global time (gcn) of this receiving node (Kn) is determined or estimated by a control unit (C), and
- the determined or estimated global time (gcn) of the receiving node (Kn) is transmitted to the at least one transmitting node (Ki, i≠n),
wherein, in the at least one transmitting node (Ki, i≠n) of the nodes, depending on both the received global time (gcn) of the receiving node (Kn) and a local time (lci) of the own local clock (LCi), a global time (gci) of this transmitting node (Ki, i≠n) is determined or estimated by a control unit (C), **characterized in that**,
in the node (Kn), a deviation measure (vn) between the own global time (gcn) and the own local time (lcn) and/or between the own global time (gcn) and the global time or times (gci) received from the other node or from the other nodes is determined or estimated, wherein, in the determination or estimation of the global time (gcn), the node (Kn) uses a deviation measure (vi) of a received global time (gci) of another such node (Ki).

**2.** The method according to claim 1, in which, in the determination or estimation of the global time (gcn), in the node (Kn), the previous own global time (gcn) of the node (Kn) is also used.

**3.** The method according to claim 1 or 2, wherein, when, in the determination or estimation of the global time (gcn), the node (Kn) additionally uses the deviation measure (vn) of the own node (Kn).

**4.** The method according to any preceding claim, in particular according to claim 3, in which,

- in at least two of the nodes (Ki (1≠n), Kn), a transformation of specified characteristic values of the own local time (lcn) to characteristic values of a global clock (GCn) is determined or estimated such that, in the nodes (Kn; Ki), at least one such deviation measure (vn; vi) is determined in each case as a development of a relationship between the respective own local clock (LCn) and the own global clock (GCn), and

- the deviation measure (vn; vi) of one of the nodes (Kn; Ki) is used in at least one other node (Ki; Kn) of such nodes as an input value for the local state estimation in at least this one other node (Ki; Kn).

5. The method according to claim 3 or 4, in which

   - a correction to a slower target speed of the global time (gcn) is carried out if a predeterminable proportion of the available deviation measures (vn, vi) exceeds a high-speed threshold value (sh), and/or
   - a correction to a faster target speed of the global time (gcn) is carried out if a predeterminable proportion of the available deviation measures (vn, vi) falls below a low-speed threshold value (st).

6. The method according to any preceding claim, in which, in the node (Kn), with respect to the instantaneous global time (gcn) thereof, a confidence value (dn) for the determination or estimation of this global time (gcn) is determined.

7. The method according to claim 6, in which, in the node (Kn), in determining or estimating the global time (gcn) of the node (Kn), the confidence value (dn) of the previous global time of the node (Kn) is also used, and in which, in the node (Kn), after receiving the global time (gci) of another node (Ki) together with such a confidence value (di) assigned to this received global time (gci), the receiving node (kn) uses the received global time (gci) and the assigned confidence value (di) thereof in determining or estimating the global time (gcn) of the receiving node (Kn).

8. The method according to any preceding claim, in which,

   - in the node (Kn), the local time (lcn) of this node (Kn) is adjusted by a time difference value to the global time (gcn) of this node (Kn), and
   - in doing so, variables or parameters, related to the previous local time (lcn), for the estimation or determination of the global time (gcn) of this node (Kn) are adjusted such that a subsequent estimation or determination of the global time (gcn) of this node (Kn) is not affected by the adjusted local time (lcn).

9. The method according to any preceding claim, in which, in the node (Kn), in determining or estimating the global time (gcn) of the node (Kn), an external time (gps) of a reference time source (XC) is additionally used as an additional external global time (gci*), wherein the reference time source (XC) is assigned to a time system independent of the network of the nodes (Kn, Ki), and/or in which, in connection with any of claims 6 or 7, a confidence value (dn*) is assigned to the external time (gci*) depending on the type of time source the reference time source (XC) comes from.

10. The method according to any preceding claim, in which the determined or estimated global time (gcn) of the node (Kn) is transmitted to other such nodes (Ki, i≠n) at a future time ts(lcn*) and, prior to transmitting for the future time ts(lcn*), the then applicable global time (gcn) or the then applicable global time (gcn) together with a deviation measure (vn) and/or with a confidence value (dn) is determined.

11. The method according to any preceding claim, wherein the global times (gcn, gci) of the nodes (Kn, Ki) are received in a further node of these nodes, wherein, depending on both the received global times and a local time of the own local clock of the further receiving node, a global time of this further receiving node is determined or estimated.

12. A circuit arrangement for synchronizing clocks in a network with a plurality of at least two nodes (Ki, Kn, i = 1,2,...,J, n≠i), wherein at least two of these nodes (Ki, Kn) can communicate with one another and respectively comprise a local clock (LCi, LCn) and a local oscillator (OS) for clocking the local clock (LCi, LCn), wherein

   - at least one receiving node (Kn) of these nodes comprises a receiving module (EM; IO) for receiving a transmitted global time (gci, i≠n) of at least one transmitting node (Ki, i≠n) of such nodes,
   - comprises a control device (C) designed and/or controllable to determine or estimate a global time (gcn) of this receiving node (Kn) depending on both the received global time (gci, i≠n) of the at least one transmitting node (Ki, i≠n) and a local time (lcn) of the own local clock (LCn) of the receiving node (Kn), and
   - at least the receiving node (Kn) of these nodes comprises a transmitting module (S; 10) for transmitting the determined or estimated global time (gcn) of the receiving node (Kn) from the receiving node (Kn) to the at least transmitting node (Ki, i≠n),

   wherein the at least transmitting node (Ki, i≠n) of the nodes comprises a control device (C) designed and/or controllable to determine or estimate a global time (gci) of this transmitting node (Ki, i≠n) depending on both the received global time (gcn) of the receiving node (Kn) of the nodes and a local time (lei) of the own local clock (LCi) of this transmitting node (Ki, i≠n), **characterized in that** wherein, in the node (Kn), a deviation measure (vn) between the own global time (gcn) and the own local time (lcn) and/or between the own global time (gcn) and the global time or times (gci) received from the other node or from the other nodes is determined or estimated, wherein, in the determination or estimation of the global time (gcn), the node (Kn) uses a deviation measure (vi) of a received global time (gci) of another such node (Ki).

13. The circuit arrangement according to claim 12, comprising

- a state estimator (KF) designed and/or controllable to determine a confidence value (dn) in the node (Kn) with respect to the instantaneous global time (gcn) thereof, and/or,
- in at least two of the nodes (Ki i≠n), Kn), a respective implemented local state estimator (KF), which is in each case designed and/or controllable to determine a respective deviation measure (vn; vi) as a development of a relationship between the respective own local clock (LCn) and the own global clock (GCn), wherein the respective control device (C) is designed and/or controllable to use the deviation measure (vn; vi) of one of the nodes (Kn; Ki) in at least one other node of such nodes (Ki; Kn) as an input value (di; dn) for the local state estimation in at least this one other node (Ki; Kn).

14. The circuit arrangement according to claim 12 or 13, comprising a voting module (VM) designed or controllable to determine or estimate a deviation measure (vn) between the own global time (gcn) and the own local time (lcn) and/or between the own global time (gcn) and a global time (gci) received from outside the node (Kn).

15. The circuit arrangement according to any of claims 12 to 14, in which the control device (C) is designed and/or controllable to carry out a method according to any of claims 1 to 10.

**Revendications**

1. Procédé de synchronisation d'horloges dans un réseau avec une pluralité d'au moins deux nœuds (Ki, Kn, i = 1, 2, ..., J, nEi), dans lequel au moins deux de ces nœuds (Ki, Kn) peuvent communiquer l'un avec l'autre et comprennent respectivement une horloge locale (LCi, LCn), dans lequel,

- dans un nœud de réception (Kn) de ces nœuds, à partir d'au moins un autre nœud d'émission (Ki, i≠n) de tels nœuds, une heure globale (gci, i≠n) du nœud d'émission (Ki, i≠n) des nœuds est reçue, laquelle heure globale est émise par ce nœud d'émission (Ki, i≠n) des nœuds,
- en fonction à la fois de l'heure globale (gci, i≠n) reçue du nœud d'émission (Ki, i≠n) et d'une heure locale (lcn) de la propre horloge locale (LCn) du nœud de réception (Kn), une heure globale (gcn) de ce nœud de réception (Kn) est déterminée ou estimée par une unité de commande (C), et
- l'heure globale (gcn) déterminée ou estimée du nœud de réception (Kn) est émise vers l'au moins un nœud d'émission (Ki, i≠n),
dans lequel, dans l'au moins un nœud d'émission (Ki, i≠n) des nœuds, en fonction à la fois de l'heure globale (gcn) reçue du nœud de réception (Kn) et d'une heure locale (lci) de la propre horloge locale (LCi), une heure globale (gci) de ce nœud d'émission (Ki, i≠n) est déterminée ou estimée par une unité de commande (C), **caractérisé en ce que**,
dans le nœud (Kn), une mesure d'écart (vn) entre la propre heure globale (gcn) et la propre heure locale (lcn) et/ou entre la propre heure globale (gcn) et l'heure ou les heures globales (gci) reçues à partir de l'autre nœud ou à partir des autres nœuds est déterminée ou estimée, dans lequel, dans la détermination ou l'estimation de l'heure globale (gcn), le nœud (Kn) utilise une mesure d'écart (vi) d'une heure globale (gci) reçue d'un autre tel nœud (Ki).

2. Procédé selon la revendication 1, dans lequel, dans la détermination ou l'estimation de l'heure globale (gcn), dans le nœud (Kn), la propre heure globale (gcn) précédente du nœud (Kn) est également utilisée.

3. Procédé selon la revendication 1 ou 2, dans lequel, lorsque, dans la détermination ou l'estimation de l'heure globale (gcn), le nœud (Kn) utilise en complément la mesure d'écart (vn) du propre nœud (Kn).

4. Procédé selon l'une quelconque des revendications précédentes, en particulier selon la revendication 3, dans lequel,

- dans au moins deux des nœuds (Ki (1≠n), Kn), une transformation de valeurs caractéristiques spécifiées de la propre heure locale (lcn) en valeurs caractéristiques d'une horloge globale (GCn) est déterminée ou estimée de telle sorte que, dans les nœuds (Kn ; Ki), au moins une telle mesure d'écart (vn ; vi) est déterminée dans chaque cas en tant qu'évolution d'une relation entre la propre horloge locale (LCn) respective et la propre horloge globale (GCn), et
- la mesure d'écart (vn ; vi) de l'un des nœuds (Kn ; Ki) est utilisée dans au moins un autre nœud (Ki ; Kn) de tels nœuds en tant que valeur d'entrée pour l'estimation d'état local dans au moins cet autre nœud (Ki ; Kn).

5. Procédé selon la revendication 3 ou 4, dans lequel

- une correction à une vitesse cible plus lente de l'heure globale (gcn) est effectuée si une proportion prédéterminable des mesures d'écart (vn, vi) disponibles dépasse une valeur seuil de haute vitesse (sh), et/ou
- une correction à une vitesse cible plus rapide de l'heure globale (gcn) est effectuée si une proportion prédéterminable des mesures d'écart (vn, vi) disponibles tombe au-dessous d'une valeur seuil de basse vitesse (st).

6. Procédé selon l'une quelconque des revendications précédentes, dans lequel, dans le noeud (Kn), par rapport à l'heure globale (gcn) instantanée de celui-ci, une valeur de confiance (dn) pour la détermination ou l'estimation de cette heure globale (gcn) est déterminée.

7. Procédé selon la revendication 6, dans lequel, dans le noeud (Kn), dans la détermination ou l'estimation de l'heure globale (gcn) du noeud (Kn), la valeur de confiance (dn) de l'heure globale précédente du noeud (Kn) est également utilisée, et dans lequel, dans le noeud (Kn), après réception de l'heure globale (gci) d'un autre noeud (Ki) conjointement avec une telle valeur de confiance (di) attribuée à cette heure globale (gci) reçue, le noeud de réception (kn) utilise l'heure globale (gci) reçue et la valeur de confiance (di) attribuée de celui-ci dans la détermination ou l'estimation de l'heure globale (gcn) du noeud de réception (Kn).

8. Procédé selon l'une quelconque des revendications précédentes, dans lequel,

- dans le noeud (Kn), l'heure locale (lcn) de ce noeud (Kn) est ajustée d'une valeur de différence horaire par rapport à l'heure globale (gcn) de ce noeud (Kn), et
- ce faisant, des variables ou des paramètres, relatifs à l'heure locale (lcn) précédente, pour l'estimation ou la détermination de l'heure globale (gcn) de ce noeud (Kn) sont réglés de sorte qu'une estimation ou une détermination ultérieure de l'heure globale (gcn) de ce noeud (Kn) n'est pas affectée par l'heure locale (lcn) réglée.

9. Procédé selon l'une quelconque des revendications précédentes, dans lequel, dans le noeud (Kn), dans la détermination ou l'estimation de l'heure globale (gcn) du noeud (Kn), une heure externe (gps) d'une source d'heure de référence (XC) est utilisée en complément en tant qu'heure globale externe supplémentaire (gci*), dans lequel la source d'heure de référence (XC) est attribuée à un système horaire indépendant du réseau des noeuds (Kn, Ki), et/ou dans lequel, en relation avec l'une quelconque des revendications 6 ou 7, une valeur de confiance (dn*) est attribuée à l'heure externe (gci*) en fonction du type de source horaire dont provient la source horaire de référence (XC).

10. Procédé selon l'une quelconque des revendications précédentes, dans lequel l'heure globale (gcn) déterminée ou estimée du noeud (Kn) est émise vers d'autres tels noeuds (Ki, i≠n) à une heure future ts(lcn*) et, avant l'émission pour l'heure future ts(lcn*), l'heure globale (gcn) alors applicable ou l'heure globale (gcn) alors applicable conjointement avec une valeur d'écart (vn) et/ou avec une valeur de confiance (dn) est déterminée.

11. Procédé selon l'une quelconque des revendications précédentes, dans lequel les heures globales (gcn, gci) des noeuds (Kn, Ki) sont reçues dans un noeud supplémentaire de ces noeuds, dans lequel, en fonction à la fois des heures globales reçues et d'une heure locale de la propre horloge locale du noeud de réception supplémentaire, une heure globale de ce noeud de réception supplémentaire est déterminée ou estimée.

12. Agencement de circuit de synchronisation d'horloges dans un réseau avec une pluralité d'au moins deux noeuds (Ki, Kn, i = 1, 2, ..., J, nEi), dans lequel au moins deux de ces noeuds (Ki, Kn) peuvent communiquer l'un avec l'autre et comprennent respectivement une horloge locale (LCi, LCn) et un oscillateur local (OS) pour chronométrer l'horloge locale (LCi, LCn),
dans lequel

- au moins un noeud de réception (Kn) de ces noeuds comprend un module de réception (EM ; IO) pour la réception d'une heure globale (gci, i≠n) émise d'au moins un noeud d'émission (Ki, i≠n) de tels noeuds,
- comprend un dispositif de commande (C) conçu et/ou pouvant être commandé pour déterminer ou estimer une heure globale (gcn) de ce noeud de réception (Kn) en fonction à la fois de l'heure globale (gci, i≠n) reçue de l'au moins un noeud d'émission (Ki, i≠n) et d'une heure locale (lcn) de la propre horloge locale (LCn) du noeud de réception (Kn), et
- au moins le noeud de réception (Kn) de ces noeuds comprend un module d'émission (S ; IO) pour l'émission de l'heure globale (gcn) déterminée ou estimée du noeud de réception (Kn) à partir du noeud de réception (Kn) vers l'au moins au noeud d'émission (Ki, i*n),

dans lequel l'au moins noeud d'émission (Ki, i≠n) des noeuds comprend un dispositif de commande (C) conçu et/ou pouvant être commandé pour déterminer ou estimer une heure globale (gci) de ce noeud d'émission (Ki, i≠n) en fonction à la fois de l'heure globale (gcn) reçue du noeud de réception (Kn) des noeuds et d'une heure locale (lci) de la propre horloge locale (LCi) de ce noeud d'émission (Ki, i*n), **caractérisé en ce que**

dans lequel, dans le noeud (Kn), une mesure d'écart (vn) entre la propre heure globale (gcn) et la propre heure locale (lcn) et/ou entre la propre heure globale (gcn) et l'heure ou les heures globales (gci) reçues à partir de l'autre noeud ou à partir des autres noeuds est déterminée ou estimée, dans lequel, dans la détermination ou l'estimation de l'heure globale (gcn), le noeud (Kn) utilise une mesure d'écart (vi) d'une heure globale (gci) reçue d'un autre tel noeud (Ki).

13. Agencement de circuit selon la revendication 12, comprenant

- un estimateur d'état (KF) conçu et/ou pouvant être commandé pour déterminer une valeur de confiance (dn) dans le noeud (Kn) par rapport à l'heure globale (gcn) instantanée de celui-ci, et/ou,
- dans au moins deux des noeuds (Ki (i≠n), Kn), un estimateur d'état local (KF) mis en oeuvre respectif, qui dans chaque cas est conçu et/ou peut être commandé pour déterminer une mesure d'écart (vn ; vi) respective en tant qu'évolution d'une relation entre la propre horloge locale (LCn) respective et la propre horloge globale (GCn), dans lequel le dispositif de commande (C) respectif est conçu et/ou peut être commandé pour utiliser la mesure d'écart (vn ; vi) de l'un des noeuds (Kn ; Ki) dans au moins un autre noeud de tels noeuds (Ki ; Kn) en tant que valeur d'entrée (di ; dn) pour l'estimation d'état local dans au moins cet autre noeud (Ki ; Kn) .

14. Agencement de circuit selon la revendication 12 ou 13, comprenant un module de vote (VM) conçu ou pouvant être commandé pour déterminer ou estimer une mesure d'écart (vn) entre la propre heure globale (gcn) et la propre heure locale (lcn) et/ou entre la propre heure globale (gcn) et une heure globale (gci) reçue à partir de l'extérieur du noeud (Kn).

15. Agencement de circuit selon l'une des revendications 12 à 14, dans lequel le dispositif de commande (C) est conçu et/ou peut être commandé pour effectuer un procédé selon l'une quelconque des revendications 1 à 10.

Fig. 1

Fig. 3

Abläufe in Knoten Kn mit i≠n:

Fig. 2

IO

Sensor-vereinigung

KF

lokaler Kalmanfilter

in K1

x1 bzw. sc1

in K2

IO

Sensor-vereinigung

KF

lokaler Kalmanfilter

x2 bzw. sc2

in K3

IO

Sensor-vereinigung

KF

lokaler Kalmanfilter

x3 bzw. sc3

## Fig. 4 CH

$t_{global}$

$d_A$: Vertrauen größer

$d_A°$:Vertrauen geringer

$t_{lokal, A}$

$t_A$

## Fig. 5

$t_{global}$

$t_{lokal, B}$

$t_B$

## Fig. 6

$t_{lokal, A}$

Ereignis, z.B. Funktelegramm aussenden

sci

$t_A$

$t_{lokal, B}$

$t_B$

## Fig. 7

$t_{global}$

$t_{lokal, B}$

$t_B$

## Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1254206
- DE 1240146
- DE 1214754
- US 3864681 A
- US 5216429 A
- US 2002131398 A1, TAYLOR JAMES L
- WO 2003047137 A

**In der Beschreibung aufgeführte Nicht-Patentliteratur**

- **MILLS, D.** Network Time Protocol (Version 3) Specification, Implementation and Analysis. RFC 1305 (Draft Standard). University of Delaware, Marz 1992
- Timing-sync protocol for sensor networks. **GANERIWAL, SAURABH ; KUMAR, RAM ; SRIVASTAVA, MANI B.** SenSys '03: Proceedings of the lst international conference an Embedded networked sensor systems. ACM Press, 2003
- **MAROTI M. ; KUSY B. ; SIMON G. ; LEDECZI A.** The Flooding Time Synchronization Protocol. *ISIS-04-501,* 12. Februar 2004
- A TTF-Based Programming Model and a Support Kernel Running on a Communicating Sensor Platform. **KANE) KIM K H et al.** AUTONOMOUS DECENTRALIZED SYSTEMS, 2007. ISADS '07. EIGHTH INTERNATIONAL SYMPOSIUM ON. IEEE, 01. Marz 2007, 368-376
- **OLFATI-SABER.** Distributed Kalman Filter with Embedded Consensus Filters. *CDC-ECC '05,* 12. Dezember 2005, 8179-8184
- Method for High Precision Clock Synchronization in Wireless Systems with Application to Radio Navigation. **ROEHR, SVEN ; GULDEN, PETER ; VOSSIEK, MARTIN.** Radio and Wireless Symposium. IEEE, Januar 2007, 551-554
- **M. VOSSIEK ; L. WIEBKING ; P. GULDEN ; J. WEIGHARDT ; C. HOFFMANN ; P. HEIDE.** Wireless local positioning. *IEEE Microwave Magazine,* 2003, vol. 4, 77-86